(19) **Europäisches Patentamt**

**European Patent Office**

**Office européen des brevets**

(11) Veröffentlichungsnummer: **0 282 514**
**B1**

(12) **EUROPÄISCHE PATENTSCHRIFT**

(45) Veröffentlichungstag der Patentschrift: **18.04.90**

(51) Int. Cl.⁵: **B 01 J 2/16, B 01 J 8/00**

(21) Anmeldenummer: **87905583.8**

(22) Anmeldetag: **08.09.87**

(86) Internationale Anmeldenummer:
**PCT/CH87/00114**

(87) Internationale Veröffentlichungsnummer:
**WO 88/01904 24.03.88 Gazette 88/07**

(54) **VERFAHREN UND EINRICHTUNG ZUM AGGLOMERIEREN VON TEILCHEN UND/ODER ZUM ÜBERZIEHEN VON SOLCHEN.**

(30) Priorität: **09.09.86 CH 3610/86**

(43) Veröffentlichungstag der Anmeldung:
**21.09.88 Patentblatt 88/38**

(45) Bekanntmachung des Hinweises auf die Patenterteilung:
**18.04.90 Patentblatt 90/16**

(84) Benannte Vertragsstaaten:
**CH DE FR GB LI**

(56) Entgegenhaltungen:
**DE-A-3 424 842**
**GB-A-1 401 304**
**US-A-4 344 747**

(73) Patentinhaber: **Pharmatronic AG**
**Kraftwerkstrasse 3**
**CH-4133 Pratteln (CH)**

(72) Erfinder: **IMANIDIS, Georgios**
**I. Akovu Orinou 6**
**GR-62100 Serres (GR)**
Erfinder: **LEUENBERGER, Hans**
**Kreuzackerweg 12**
**CH-4148 Pfeffingen (CH)**
Erfinder: **NOWAK, Reinhard**
**Im Schlattgarten 26**
**D-7852 Binzen (DE)**
Erfinder: **STUDER, Jürg, Mark**
**Thunstrasse 130**
**CH-3074 Muri (CH)**
Erfinder: **WINZAP, Stefan**
**Brückliweg 1**
**CH-4153 Reinach (CH)**

(74) Vertreter: **Eder, Carl E. et al**
**Patentanwaltsbüro EDER AG Lindenhofstrasse 40**
**CH-4052 Basel (CH)**

Courier Press, Leamington Spa, England.

**Beschreibung**

Technisches Gebiet der Erfindung

Die Erfindung betrifft ein Verfahren gemäss dem Oberbegriff des Anspruchs 1, nämlich ein Verfahren zum Agglomerieren von Teilchen und/oder zum Überziehen von solchen, insbesondere zum Überziehen mit anderen Teilchen.

Die Erfindung betrifft des weiteren eine Einrichtung gemäss dem Oberbegriff des Anspruchs 7, nämlich eine Einrichtung zum Agglomerieren von Teilchen und/oder zum Überziehen von solchen, insbesondere zu Überziehen mit anderen Teilchen, mit einem Behälter und einer in diesem drehbar gelagerten Rotorscheibe zum Bewegen der Teilchen.

Verfahren und Einrichtungen dieser Art können zum Beispiel zur Herstellung von teilchenförmigen Medikamenten oder Bestandteilen von solchen und ferner auch von Nährmitteln, Agrochemikalien sowie sonstigen Chemikalien, Saatgutpellets sowie metallischen Granulaten, wie etwa nach der Granulatbildung eventuell noch einem Sintervorgang unterzogenen Granulaten zur Bildung von Katalysatormaterialien, verwendet werden.

Stand der Technik

Aus der US-Patentschrift 4 323 312 sind Wirbelschicht-Granulatoren bekannt, die einen Behälter mit einer vertikalen Mittelachse, eine drehbar um diese gelagerte Rotorscheibe, eine zum Drehen der letzteren dienende Antriebsvorrichtung und ein Gebläse aufweisen. Zum Agglomerieren eines Gutes mit einer solchen Einrichtung werden dessen Teilchen in einem sich oberhalb der Scheibe befindenden Bearbeitungsraum durch Rotieren der Scheibe und Hindurchleiten von Luft bewegt. Dabei rollen sich momentan gerade auf der Scheibe befindende Teilchen jeweils zu deren Rand hin nach aussen, werden dort vom Luftstrom nach oben gehoben und fallen wieder auf die Scheibe zurück.

In der Praxis wird das zu agglomerierende Gut häufig in trockener Form in den Behälter eingebracht und in diesem mit einer wasserhaltigen Flüssigkeit befeuchtet, die mit einer in der US-Patentschrift 4 323 312 nicht offenbarten Sprühdüse in den Behälter eingesprüht wird. Die während der Flüssigkeitszufuhr durch Agglomeration entstandenen Teilchen werden danach ohne Flüssigkeitszufuhr im Bearbeitungsraum getrocknet. Verschiedene, insbesondere geometrische und mechanische Eigenschaften der durch Granulation gebildeten Teilchen, zum Beispiel deren Formen sowie mittlere Grössen, die Streuung der Teilchengrössen und die Porosität sowie die Abriebfestigkeit der Teilchen, hängen nebst von andern Verfahrensparametern vor allem vom Flüssigkeitsgehalt der Teilchen bei der Beendung des Granulationsprozesses ab. Beim Agglomerieren einer Charge eines teilchenförmigen Gutes können sich zum Beispiel zuerst nur ursprünglich vorhandene Teilchen aneinander und an bereits gebildete Agglomerat-Teilchen anlagern. Wenn nun die insgesamt zugeführte Flüssigkeitsmenge einen gewissen Wert überschreitet, lagern sich auch bereits agglomerierte, verhältnismässig grosse Teilchen aneinander an, so dass Teilchen-Zwillinge oder -Drillinge usw. entstehen, die Teilchenformen sehr unregelmässig werden und die Teilchengrösse schnell sowie unstetig zunimmt. Der Flüssigkeitsgehalt der Teilchen hängt selbstverständlich von der Menge der pro Masseneinheit des trockenen, teilchenförmigen Gutes eingesprühten Flüssigkeit, aber zusätzlich auch noch von der Feuchtigkeit der in den Behälter eingeleiteten Luft und von der durch diese Luft vom teilchenförmigen Gut in der Form von Dampf und/oder suspendierenden Tröpfchen abtransportierten Flüssigkeitsmenge ab. Wenn die in den Behälter eingeleitete Luft zumindest zum Teil aus der Umgebung angesaugt wird, kann ihr Feuchtigkeitsgehalt abhängig vom Feuchtigkeitsgehalt der Umgebungsluft variieren und dadurch die Produkteigenschaften beeinflussen. Es ist daher vor allem bei der fabrikationsmässigen Herstellung von Granulaten, wenn wiederholt grössere Chargen von solchen herzustellen sind, oft nur unvollkommen möglich, Granulat-Teilchen mit den gewünschten Eigenschaften, wie zum Beispiel möglichst kugelähnlichen Formen sowie einheitlichen Grössen, herzustellen. In der Praxis ist es nun ebenfalls bekannt, die dem Behälter zugeführte Luft vor der Einleitung in den Behälter zu konditionieren, d.h. auf eine vorgegebene, kleine Restfeuchtigkeit zu bringen. Dies vergrössert jedoch den apparativen Aufwand sowie die Betriebskosten und hat vor allem den Nachteil, dass die in den agglomerierten Teilchen vorhandenen Flüssigkeitsmengen und die davon abhängigen Teilcheneigenschaften trotzdem noch von den angestrebten Sollwerten abweichen können. Dies ist unter anderem darauf zurückzuführen, dass die Mengen der zur Granulation von Chargen eines teilchenförmigen Gutes erforderlichen Flüssigkeit noch von der in der Praxis auch bei im Prinzip gleichen Gutarten oft variierende Korngrösse des ursprünglichen, trockenen, teilchenförmigen Gutes sowie von denjenigen Flüssigkeitsmengen abhängig sind, die durch die Luft aus dem Bearbeitungsraum des Behälters abgeleitet werden und in der Praxis auch bei gleichen Gutmengen und -arten ebenfalls häufig von Charge zu Charge etwas variieren.

Bei für pharmazeutische Verwendungen vorgesehenen Granulaten wird oft eine rundliche, möglichst kugelähnliche Form der Granulat-Teilchen angestrebt. Bei verschiedenen Produkten lässt sich dies mit den bekannten Verfahren nur mehr oder weniger gut erreichen, wenn dem zu agglomerierenden, teilchenförmigen Gut als sogenanntes Saatgut dienende Zuckerteilchen beigefügt werden, an die sich dann die Teilchen mit dem pharmazeutischen Wirkstoff anlagern können. In vielen Fällen ist es jedoch ungünstig, wenn die hergestellten Teilchen Zucker enthalten, weil dadurch zum Beispiel bei vorgegebenen Teilchengrössen der Wirkstoffgehalt eines Teilchens relativ klein wird.

Ähnliche Probleme wie bei der Herstellung von Granulaten stellen sich auch, wenn man durch eine Agglomeration gebildete Teilchen oder frisch in einen Bearbeitungsraum eingebrachte Teilchen unter Vornahme einer Befeuchtung mit mindestens einem anderen, im allgemeinen wesentlich kleineren Teilchen enthaltenden Überzug versehen will. Wenn nämlich zum Beispiel die zugeführte Flüssigkeitsmenge zu gross wird, kann eine unerwünschte Agglomeration der grossen, zu agglomerierenden oder schon mit mehr oder weniger dicken Überzügen versehenen Teilchen stattfinden.

Darstellung der Erfindung

Der Erfindung liegt nun die Aufgabe zugrunde, ein Verfahren und eine Einrichtung zu schaffen, das bzw. die Nachteile der bekannten Verfahren bzw. Einrichtungen vermeidet und insbesondere ermöglicht, Granulate oder mit je mindestens einem beispielsweise teilchenhaltigen Überzug versehene Teilchen herzustellen, die möglichst genau vorgegebene Eigenschaften, wie zum Beispiel rundliche, möglichst kugelartige Formen und/oder bestimmte mittlere Teilchengrössen, Teilchengrössenstreuungen, Bindungs und Abriebfestigkeiten haben.

Diese Aufgabe wird durch ein Verfahren der einleitend genannten Art gelöst, das erfindungsgemäss durch die Merkmale des Anspruchs 1 gekennzeichnet ist.

Zur Lösung der Aufgabe gehört ferner eine Einrichtung der einleitend genannten Art, wobei die Einrichtung erfindungsgemäss durch den kennzeichnenden Teil des Anspruchs 7 gekennzeichnet ist.

Das Verfahren und die Einrichtung gemäss der Erfindung ermöglichen die Herstellung von Teilchen, die auch bei auf mehrere Chargen aufgeteilten Produktionsmengen verhältnismässig genau vorgegebene Eigenschaften, insbesondere geometrische und/oder mechanische Eigenschaften, haben, so dass zum Beispiel die Formen der Teilchen einer vorgegebenen Form zumindest sehr ähnlich sind. Das Verfahren und die Einrichtung sind insbesondere gut für die Herstellung von rundlichen und mindestens einigermassen symmetrischen, zum Beispiel mindestens annähernd ellipsoid oder kugelförmigen Teilchen geeignet, die in der Pharmazie üblicherweise als "Pellets" bezeichnet werden.

Das Verfahren und die Einrichtung können zum Beispiel dazu dienen, mehr oder weniger ähnliche Grössen besitzende, alle aus der gleichen Substanz oder aus verschiedenen Substanzen bestehende Teilchen eines Gutes in einem zum Bewegen und Bearbeiten der Teilchen dienenden Bearbeitungsraum zu agglomerieren und dadurch zu grösseren Teilchen zu verbinden. Wie noch erörtert wird, erfolgt die Agglomeration normalerweise unter Aufsprühung einer Flüssigkeit, nämlich eines Binde- und/oder Befeuchtungsmittels. Das Verfahren und die Einrichtung gemäss der Erfindung sind nun insbesondere auch sehr gut geeignet, um für pharmazeutische Zwecke ein teilchenförmiges Gut zu agglomerieren, das keine aus Zucker bestehende Saatgut-Teilchen, sondern nur Teilchen aufweist, die keine im Endprodukt unerwünschten Substanzen enthalten und zum Beispiel alle mindestens ungefähr die gleiche Grösse haben. Die ursprünglich vorhandenen Teilchen können zum Beispiel mindestens einen pharmazeutischen Wirkstoff sowie normalerweise mindestens einen Hilfsstoff und/oder eventuell ein Bindemittel enthalten.

Man kann jedoch auch als Ausgangsgut in den zum Bewegen und Bearbeiten von Teilchen dienenden Bearbeitungsraum eingebrachte Teilchen oder vorgängig im gleichen Bearbeitungsraum agglomerierte Teilchen im Bearbeitungsraum bewegen, nämlich verwirbeln, mit mindestens einem Überzug versehen und das Verfahren in erfindungsgemässer Weise in Abhängigkeit vom gemessenen Drehmoment und/oder einer damit verknüpften Grösse steuern. Das Überzugsmaterial besteht dabei vorteilhafterweise zumindest zum Teil aus zweiten Teilchen. Die Grössen der zur Bildung eines Überzugs dienenden, zweiten Teilchen sind vorzugsweise ungefähr oder mindestens zehn Mal oder sogar ungefähr oder mindestens hundert Mal kleiner als die Grössen der erstgenannten Teilchen, auf die der Überzug aufgebracht wird. Die ersten, grösseren Teilchen können etwa Grössen, zum Beispiel mittlere Durchmesser, von mindestens 0,4 mm sowie höchstens 1 mm, beispielsweise von 0,4 bis 0,5 mm und die zweiten, als Überzugsmaterial aufgebrachten Teilchen Grössen von 0,01 bis 0,03 mm haben. Die ersten, grösseren Teilchen und die zweiten, als Überzugsmaterial auf diese aufzubringenden, kleineren Teilchen können als trokkene Teilchen-Chargen, zum Beispiel als Gemisch, in den Bearbeitungsraum eingebracht werden. Die zweiten, zur Bildung der Überzüge dienenden Teilchen können jedoch stattdessen oder mindestens zum Teil während der Bewegung, und nämlich Verwirbelung der ersten, zu überziehenden Teilchen kontinuierlich oder intermittierend in den Bearbeitungsraum eingeleitet werden. Die zweiten, kleineren Teilchen können dann durch Bewegen, nämlich Verwirbeln des erste und zweite Teilchen enthaltenden, teilchenförmigen Guts und Einsprühen einer Flüssigkeit, die ein Binde- und/oder Befeuchtungsmittel aufweist, als Überzugsmaterial auf die grösseren Teilchen aufgebracht werden. Die als Überzugsmaterial aufzubringenden Teilchen können möglicherweise jedoch auch in einer Flüssigkeit suspendiert werden und mit dieser zusammen als Suspension erst während der Bewegung der zu überziehenden Teilchen in den Bearbeitungsraum eingesprüht werden. Das Überzugsmaterial könnte aber eventuell auch ausschliesslich aus einem Lack, zum Beispiel einer Lösung, oder einer anderen, nicht teilchenartigen Substanz bestehen.

Wenn Teilchen für pharmazeutische Zwecke herzustellen sind, können die ersten, ursprünglich grösseren Teilchen etwa mindestens eine pharmazeutischen Wirksubstanz, normalerweise mindestens eine Hilfssubstanz und eventuell ein Bindemittel enthalten, während die zweiten, kleineren, das Überzugsmaterial bildenden Teilchen, aus einer anderen Wirksubstanz und/oder einer Schutz- und/oder Hilfssubstanz, wie Talk, Stärke, Polyäthylenglykol, Äthylcellulose, Acrylsäurederivat usw., bestehen können. Ferner kann man nacheinander zwei oder mehr aus verschiedenen Substanzen bestehende Überzüge aufbringen.

Das ursprünglich vorhandene, trockene, teilchenförmige Gut kann derart beschaffen sein, dass jedes seiner Teilchen bei einer Befeuchtung eine zum Erzielen einer Haftverbindung ausreichende Bindewirkung ergibt. Das ursprünglich vorhandene, trockene, teilchenförmige Gut kann jedoch aus einer Mischung von Teilchen bestehen, von denen die einen zum Beispiel aus mindestens einem pharmazeutischen Wirkstoff und die anderen aus einem Bindemittel bestehen. In diesen Fällen kann zur Agglomeration der Teilchen, wenn diese durch Drehen der Rotorscheibe und Hindurchleiten von Luft oder eventuell eines anderen Gases bewegt werden, als Befeuchtungsmittel reines Wasser, zum Beispiel Wasser, das abhängig von der gewünschten Reinheit des Produkts vorgängig demineralisiert oder destilliert worden ist, oder möglicherweise eine organische Flüssigkeit, wie Äthanol oder sonst irgend ein organisches Lösungsmittel, auf die Teilchen aufgesprüht werden.

Wenn die Teilchen des ursprünglich vorhandenen, trockenen Gutes bei einer blossen Befeuchtung mit Wasser oder einer organischen Flüssigkeit keine ausreichende Bindung ergeben, kann man während des Agglomerations und/oder Überziehvorgangs eine ein Bindemittel aufweisende Flüssigkeit aufsprühen. Das Bindemittel kann beispielsweise durch eine flüssige Komponente der Flüssigkeit, einen in Wasser oder einem anderen Lösungsmittel gelösten Feststoff oder einen in der Flüssigkeit suspendierenden Feststoff gebildet sein. Ferner besteht die Möglichkeit, als Flüssigkeit ein bei normaler Raumtemperatur festes und durch Erwärmen geschmolzenes Wachs auf das teilchenförmige Gut aufzusprühen.

Möglicherweise könnte man sogar ein zum Beispiel mehr oder weniger wachsartiges, teilchenförmiges Gut im Behälter so stark erwärmen, dass die ursprünglich vorhandenen Teilchen zumindest an ihrer Oberfläche erweicht und ohne Aufsprühen einer Flüssigkeit sowie ohne Zufuhr eines zusätzlichen Bindemittels agglomeriert werden.

Während des Agglomerations- und/oder Überziehvorgangs kann das von der Antriebsvorrichtung auf die Rotorscheibe übertragene Drehmoment ermittelt werden, um aufgrund des Drehmomentes die Dauer des Agglomerations- und/oder Überziehvorgangs und/oder die Menge der zuzuführenden Flüssig keit festzulegen. Die Antriebsvorrichtung weist vorzugsweise einen elektrischen Motor und ein Getriebe zur stufenlosen oder eventuell stufenweisen Veränderung der Drehzahl der Rotorscheibe auf. Falls ein derartiges Getriebe vorhanden ist, wird das Drehmoment vorteilhafterweise mit einem in Bezug auf die Drehmoment-Übertragung zwischen der Antriebswelle dieses Getriebes und der Rotorscheibe angeordneten Drehmoment-Messorgan ermittelt, so dass durch das genannte Getriebe verursachte Verluste bei der Drehmoment-Übertragung die Messung nicht beeinflussen.

Die zum Drehen der Rotorscheibe erforderliche Leistung ist gleich dem Produkt Drehmoment mal Winkelgeschwindigkeit und also proportional zum Drehmoment. Man kann daher statt des Drehmoments auch die mit diesem verknüpfte, zum Antreiben der Rotorscheibe erforderliche Leistung ermitteln, indem zum Beispiel die vom Motor der Antriebsvorrichtung verbrauchte elektrische Leistung gemessen wird. Da diese jedoch wegen Verlustleistungen im Motor und im vorzugsweise vorhandenen, zum einstellbaren Verändern der Drehzahl dienenden Getriebe grösser ist als die von der Rotorscheibe zum Bewegen des teilchenförmigen Gutes verbrauchte Leistung und da die genannten Verlustleistungen zum Beispiel in Abhängigkeit von Temperatur des Motors und/ oder des genannten Getriebes zeitlich ändern können, ist es vorteilhaft, statt der vom Motor verbrauchten Leistung eben direkt in der vorgängig erwähnten Weise mit einem Drehmoment-Messorgam das auf die Rotorscheibe übertragene Drehmoment zu messen.

Untersuchungen haben gezeigt, dass die Abhängigkeit des zum Drehen der Rotorscheibe erforderlichen Drehmoments von der Zeitdauer des Agglomerations- und/oder Überziehvorganges und der während des letzteren zugeführten Flüssigkeitsmenge charakteristische Merkmale aufweist, die auch für verschiedenartige Güter bestimmten Phasen der Agglomerations- und/ oder Überziehvorgänge zugeordnet werden können. Dies ermöglicht, die Agglomeration und/ oder das Überziehen derart durchzuführen und zu steuern, dass gewisse variable Eigenschaften des ursprünglich vorhandenen, teilchenförmigen Guts, zum Beispiel dessen Teilchengrössen, oder gewisse variable Verfahrensparameter, wie die Feuchtigkeit der iden Bearbeitungsraum des Behälters eingeleiteten Luft, die für die Qualität der hergestellten Produkte wichtigen Eigenschaften nicht oder höchstens relativ wenig beeinflussen. Die Unempfindlichkeit gegen Änderungen der Feuchtigkeit der zugeführten Luft ermöglicht wiederum, dem Bearbeitungsraum zumindest im allgemeinen aus der Umgebung stammende Luft zuzuführen, ohne dass deren Feuchtigkeit durch besondere Massnahmen, zum Beispiel durch Trocknen, auf einen vorgegebenen Wert oder Wertebereich gebracht wird.

Wenn für die Agglomeration oder das Überziehen von Teilchen mindestens zeitweise eine Flüssigkeit in den Bearbeitungsraum eingesprüht wird, wie es bei den meisten Anwendungen der Fall ist, kann der Einsprühvorgang in Abhängigkeit vom gemessenen Drehmoment und/oder einer damit verknüpften Grösse gesteuert und zum Beispiel beim Agglomerieren von Teilchen in einem bestimmten Zeitpunkt vorübergehend unterbrochen und/oder beendet werden. Wenn ein flüssiges Bindemittel in das Bewegte eingesprüht wird, kann der Einsprühvorgang jeweils ungefähr in einem Zeitpunkt beendet oder zumindest unterbrochen werden, der am Ende einer Verfahrensphase liegt, in der beim Agglomerieren an bereits agglomerierte Teilchen zumindest im allgemeinen ausschliesslich ursprünglich im teilchenförmigen Gut vorhandene Teilchen angelagert werden und beim Überziehen nur Überzugsmaterial angelagert wird. Auf diese Verfahrensphase würde dann eine Verfahrensphase folgen, in der sich auch bereits agglomerierte bzw. mit einem Überzug versehene Teilchen aneinander anlagern würden. Wenn ein teilchenförmiges Gut unter Aufsprühung eines flüssigen Bindemittels agglomeriert werden soll, kann das Verfahren also derart gesteuert und durchgeführt werden, dass sich, abgesehen von allfälligen Ausnahmen in der Anfangsphase, an bereits agglomerierte Teilchen zumindest im allgemeinen nur ursprünglich im teilchenförmigen Gut vorhandene Teilchen anlagern und sich bereits agglomerierte Teilchen nicht zu Zwillingen oder Drillingen und dergleichen verbinden. Die agglomerierten Teilchen erhalten dann verhältnismässig einheitliche Formen und Abmessungen. Die sich ergebenden Formen der agglomerierten Teilchen sind unter anderem von Eigenschaften des Teilchenmaterials abhängig. Wenn dieses eine genügende Plastizität besitzt, lassen sich rundliche, ellipsoidartige oder sogar ziemlich genau kugelartige Formen erzielen.

Wie bereits erwähnt, ist es bei gewissen Arten von Teilchen möglich, diese zu agglomerieren und/oder mit Überzügen zu versehen, indem sie statt mit einem Bindemittel lediglich mit einem Befeuchtungsmittel besprüht werden. Zum Beispiel können Teilchen, die als Träger- oder Hilfssubstanz mikrokristalline Cellulose aufweisen, durch Besprühen mit Wasser ausreichend haftend gemacht werden, dass sie agglomeriert werden können, wobei die Bindewirkung zumindest weitgehend durch Wasserstoffbrücken zustande kommt. Insbesondere bei derart, d.h. unter Aufsprühung eines Befechtungsmittels durchgeführten Agglomerationsvorgängen, kann es möglich sein, auch dann noch weitgehend kugelförmige sowie auch sonst qualitativ einwandfreie Agglomerat-Teilchen herzustellen, wenn bereits agglomerierte Teilchen sich noch zu grösseren Teilchen verbinden, vorausgesetzt, dass das Einsprühen des Befeuchtungsmittels in einem Zeitpunkt beendet wird, in welchem das Drehmoment der Rotorscheibe mindestens ein gewisses Kriterium erfüllt.

Man kann daher zum Beispiel erreichen, dass die durch eine Agglomeration und/oder das Aufbringen eines Überzugs hergestellten Teilchen auch im Fall, dass gewisse Eigenschaften der verwendeten Ausgangsmaterialien oder gewisse Verfahrensparameter von Charge zu Charge ändern, sowohl zumindest annähernd eine vorgegebene, insbesondere rundliche Form als auch Grössen haben, die zumindest nahe bei einem vorgegebenen Wert liegen. Für pharamazeutische Anwendungen, zum Beispiel zum Einbringen in Kapseln, hergestellte Teilchen können mittlere und/oder maximale Grössen haben, die typischerweise höchstens 2 mm, vorzugsweise höchstens 1,5 mm und beispielsweise etwa 0,5 bis 1 mm betragen. Ferner können auch verschiedene Arten von Festigkeiten der hergestellten Teilchen, wie zum Beispiel die Abriebfestigkeit, mindestens annähernd auf einen vorgegebenen und von Charge zu Charge konstanten Wert gebracht werden.

Die durch Agglomerieren gebildeten und/oder mit einem Überzugsmaterial beschichteten Teilchen können auch im gleichen Bearbeitungsraum, in dem sie agglomeriert worden sind, mit Luft oder einem anderen Gas verwirbelt und getrocknet werden, wobei beim Trocknungsvorgang selbstverständlich keine Flüssigkeit in den Bearbeitungsraum gesprüht wird.

Kurze Beschreibung der Zeichnung

Die Erfindung soll nun anhand in der Zeichnung dargestellter Ausführungsbeispiele erläutert werden. In der Zeichnung zeigt

die Figur 1 einen schematisierten Vertikalschnitt durch eine Einrichtung zum Agglomerieren und/oder Überziehen von Teilchen,

die Figur 2 eine der Figur 1 entsprechende Darstellung einer Variante der Einrichtung,

die Figur 3 einen schematisierten Horizontalschnitt durch den den Bearbeitungsraum begrenzenden Behälter der in der Figur 2 dargestellten Einrichtung,

die Figur 4 ein Diagramm zur Veranschaulichung der Abhängigkeit des zum Drehen der Rotorscheibe der Einrichtung erforderlichen Drehmomentes von der Zeit bzw. der zugeführten Flüssigkeitsmenge bei einem unter Aufsprühung eines flüssigen Bindemittels erfolgenden Agglomerationsvorgang und

die Figur 5 ein der Figur 4 entsprechendes Diagramm für einen Agglomerationsvorgang, bei dem anstelle eines Bindemittels lediglich ein Befeuchtungsmittel auf die Teilchen aufgesprüht wird.

Bevorzugte Ausführungsbeispiele der Erfindung

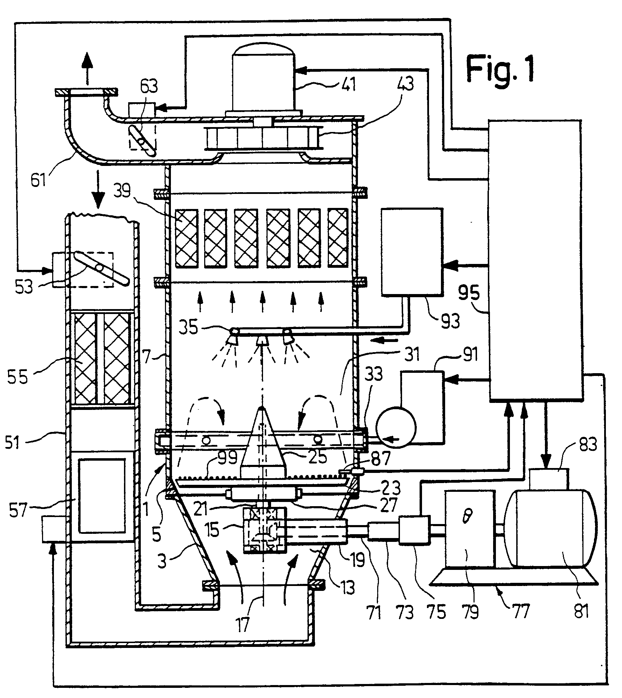

Die in der Figur 1 ersichtliche, zumindest im wesentlichen durch eine Wirbelschichtapparatur gebildete Einrichtung weist einen Behälter 1 auf. Dessen Wandung besitzt beim unteren Behälterende einen sich nach unten verjüngenden, konischen Wandteil 3, der an seinem oberen Ende durch ein Paar miteinander verschraubte Flanschringe mit einem mehrteiligen, im wesentlichen zylindrischen Mantel 7 verbunden ist. Der obere der beiden Flanschringe besitzt eine konische Innenfläche und bildet einen Sitz 5. Der Innenraum des konischen Wandteils 3 bildet eine Gaszuleitkammer 13 und enthält eine Lager- und Getriebeeinheit 15 mit einem Gehäuse, das mit einem radialen, hohlen Arm 19 und beispielsweise zwei anderen, nicht dargestellten, radialen Armen am Wandteil 3 befestigt ist und Lager enthält, die eine Welle 21 um die mit der Mittelachse des Behälters 1 zusammenfallende, vertikale Achse 17 drehbar und axial unverschiebbar lagern. An der Welle 21 sind oberhalb der Lager- und Getriebeeinheit 15 mittels nicht sichtbaren Haltemitteln eine Rotorscheibe 23 und ein Aufsatz 25 mit einem als Kappe ausgebildeten, sich nach oben verjüngenden, hohlen Konus axial verschiebbar bezüglich der Welle 21 drehbar gehalten. Die Rotorscheibe 23 besitzt einen metallischen Hauptteil und einen an dessen Aussenrand befestigten, zum Beispiel aus Polytetrafluoräthylen bestehenden Gleitdichtungsring. Der metallische Hauptteil der Rotorscheibe kann an seiner oberen Seite eventuell noch mit einer Deckscheibe oder einem Belag versehen sein, die bzw. der zum Beispiel aus natürlichem und/oder synthetischen Gummi besteht und eine Vielzahl über die Oberfläche der Rotorscheibe verteilte, noppenartige Erhöhungen bildet. Die Rotorscheibe 23 ist mit einer von der Aussenseite des Behälters hermanuell betätigbaren Stell- und Mitnehmervorrichtung 27 entlang der Welle verstellbar. In der unteren Endstellung der Rotorscheibe 23 liegt deren Gleitdichtungsring dicht am Sitz 5 an. Wenn die Rotorscheibe 23 nach oben verschoben wird, ist zwischen ihr und der Innenfläche der Behälterwandung, wie in der Figur 1 dargestellt, ein Ringspalt vorhanden. Die Stell- und Mitnehmervorrichtung 27 bildet ferner eine Rutschkupplung, die die Rotorscheibe 23, wenn diese angehoben ist, mehr oder weniger drehfest mit der Welle 21 verbindet. Wenn sich die Rotorscheibe 23 hingegen in ihrer unteren Endstellung befindet und auch die entlang der Welle 21 verstellbaren Teile der Vorrichtung 27 ihre tiefstmögliche Lage einnehmen, wird die Rotorscheibe 23 mindestens weitgehend von der Welle 21 entkuppelt.

Der sich oberhalb der Rotorscheibe 23 befindende, freie Bereich des Behälterinnenraums bildet einen Bearbeitungsraum 31. Der zylindrische Mantel 7 ist ein wenig oberhalb der Rotorscheibe 23 mit einem zum Einleiten eines trockenen, teilchenförmigen Gutes dienenden Einlassorgan 33 versehen, das aus einem Ring mit einem Kanal und über den Umfang des Mantels 7 verteilten, in den Bearbeitungsraum 31 mündenden Düsen gebildet ist. Ferner ist eine Sprühvorrichtung 35 mit mindestens einem zum Einsprühen einer Flüssigkeit in den Bearbeitungsraum 31 dienenden Sprühorgan vorhanden, das mindestens eine Düse und beispielsweise einige um die vertikale Mittelachse des Behälters 1 herum verteilte, oberhalb des beim Betrieb von den bewegten Teilchen eingenommenen Raumbereichs angeordnete, senkrecht oder geneigt nach unten gerichtete Düsen aufweist. Über dem Bearbeitungsraum 31 befindet sich ein Filter 39 und über diesem ein Gebläse 41 mit einem beispielsweise als Schaufelrad ausgebildeten Förderorgan 43.

Eine Gaszuleitung 51 ist mit einem nicht ersichtlichen Ansaugstutzen zum Ansaugen von Umgebungsluft, einem Durchfluss-Regulierorgan 53, einem Filter 55 sowie einem Gaserhitzer 57 versehen und beim unteren Ende des konischen Wandteils 3 an den Behälter 1 angeschlossen. Eine an den Ausgang des Gebläses 41 angeschlossene Gasableitung 61 weist ein Durchfluss-Regulierorgan 63 und einen in die Ümgebung mündenden Auslass auf. Vorzugsweise ist mindestens eines der beiden zum Regulieren des Gasdurchflusses dienenden Regulierorgane 53, 63 mit einer elektrisch steuerbaren Betätigungsvorrichtung versehen.

Die Welle 21 steht über ein im Gehäuse der Lager- und Getriebeeinheit 15 angeordnetes Getriebe, nämlich ein Kegelradgetriebe, in Drehwirkverbindung mit einer durch den hohlen Arm 19 verlaufenden und in diesem gelagerten, starren Welle 71. Diese ist über eine nur schematisch angedeutete, mit Kupplungen versehene Gelenkwelle 73 drehfest mit dem abtriebsseitigen Ende der Welle eines Drehmoment-Messorgans 75 verbunden. Dieses weist einen Messwandler mit Dehnungsmessstreifen auf, die zu einer Wheatstoneschen Brücke geschaltet sind, um beim Betrieb aus einer an die Brücke angelegten, konstanten Spannung als elektrisches Mess-Signal eine zum übertragenen Drehmoment proportionale Spannung zu erzeugen. Der antriebsseitige Wellenzapfen des Messorgans 75 ist drehfest mit der Abtriebswelle eines Getriebes 79 verbunden, das Mittel zur stufenlosen Übersetzungs- und Drehzahleinstellung besitzt. Die Antriebswelle des Getriebes 79 ist drehfest mit der Welle eines elektrischen Motors 81 verbunden, der mit einer elektrisch steuerbaren Schaltvorrichtung 83, zum Beispiel einem Schaltschütz ein- und ausschaltbar ist und Zusammen mit dem Getriebe 79 eine Antriebsvorrichtung 77 bildet.

Im Bearbeitungsraum ist oberhalb der Rotorscheibe 23 und von deren obern Begrenzungsfläche durch einen kleinen Zwischenraum getrennt, mindestens ein Feuchtigkeits-Messorgan 87 angeordnet und bezüglich der Achse 17 undrehbar, aber beispielsweise höhenverstellbar an der Wandung des Behälters 1, nämlich am Mantel 7 befestigt.

Das Einlassorgan 33 ist mit einer zum Zuführen eines teilchenförmigen Guts dienenden Zufuhrvorrichtung 91 verbunden, die einen Gutspeicher, eine elektrisch antreibund steuerbare Förder- und/oder Dosiervorrichtung, nämlich zum Beispiel eine ein- und ausschaltbare und eventuell regulierbare Dosierschnecke und eine Blasvorrichtung aufweist, um das von der Dosierschnecke geförderte Gut mit Druckluft oder einem anderen Gas durch das Einlassorgan 33 in den Bearbeitungsraum 31 hineinzublasen. Falls die Einrichtung derart betrieben wird, dass im Bearbeitungsraum ein Unterdruck gegenüber der Umgebung entsteht, kann das teilcheförmige Gut auch durch diesen Unterdruck angesaugt und in den Bearbeitungsraum hinein gefördert werden.

Das bzw jedes Sprühorgan 35 ist mit einer zum Zuführen einer Flüssigkeit dienenden Zufuhrrichtung 93 verbunden. Diese weist beispielsweise ein Flüssigkeitsreservoir und ein elektrisch steuerbares Ventil und/oder eine elektrisch antreib- und steuerbare Pumpe auf und kann eventuell auch noch mit einem Durchflussmessorgan versehen sein.

Ferner ist eine elektronische Überwachungs-, Steuer- und/oder Regelvorrichtung 95 vorhanden. Diese ist durch elektrische Leitungen mit dem Gebläse 41, dem Gaserhitzer 57, den Betätigungsvorrichtungen der Regulierorgane 53, 63, dem Drehmoment-Messorgan 75, der Schaltvorrichtung 83, dem Feuchtigkeits-Messorgan 87 und den beiden Zufuhrvorrichtungen 91, 93 verbunden. Die Vorrichtung 95 besitzt elektronische Schaltungsmittel zum Verarbeiten der ihr vom Drehmoment-Messorgan 75 und vom Feuchtigkeits-Messorgan 87 zugeführten, elektrischen Mess-Signale, wobei diese Schaltungsmittel zum Beispiel analog arbeitende Rechenverstärker, Vergleicherschaltungen und dergleichen und/oder einen Analog/Digitalwandler zum Umwandeln der Mess-Signale in Digitalsignale und einen digitalen Rechner sowie Speicher aufweisen. Die Vorrichtung 95 kann ferner Registrier- und Anzeigemittel, wie zum Beispiel einen Schreiber und/oder einen Bildschirm zum Darstellen mindestens einer Kurve und/oder analoge und/oder digitale Anzeigevorrichtungen und/oder einen Drucker zum Anzeigen bzw. Ausdrucken von Messwerten und/oder daraus errechneten Grössen besitzen. Die Vorrichtung 95 hat insbesondere auch Betätigungsorgane und elektronische Schaltungsmittel, die ermöglichen, die verschiedenen notwendigen Steuer- und/oder Regeloperationen wahlweise manuell oder automatisch durchzuführen, wobei die durch die Vorrichtung 95 steuerbaren Organe und Vorrichtungen auch noch selbst mit manuell betätigbaren Betätigungsvorrichtungen wie Schalter und Stellmitteln versehen sein können. Die Vorrichtung 95 ist des weitern mit Einstell- oder Dateneingabeelementen versehen, um vorgegebene Parameter in analoger oder digitaler Form einzugeben.

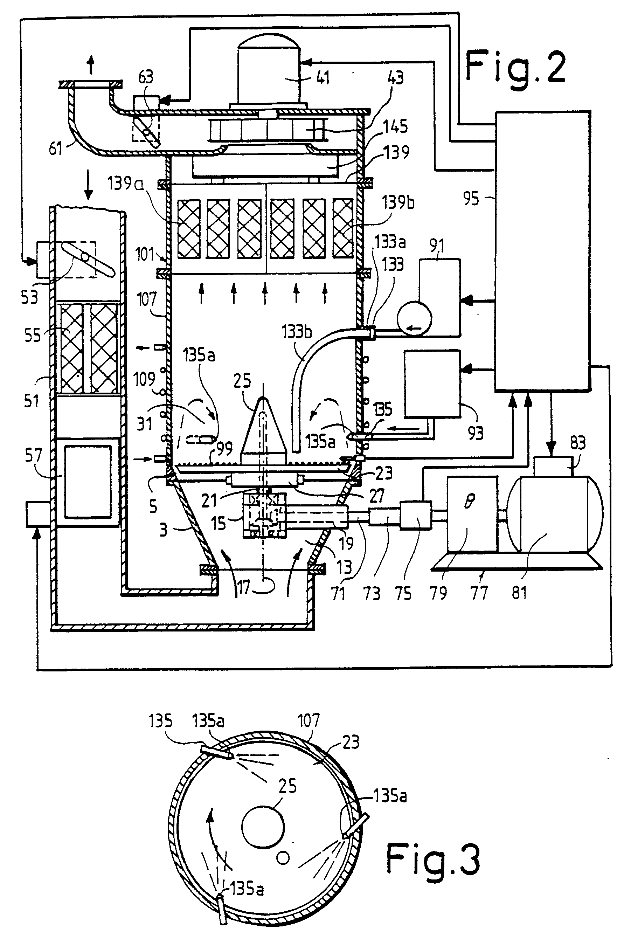

Die in der Figur 2 ersichtliche Einrichtung ist weitgehend gleich wie die Einrichtung gemäss der Figur 1 ausgebildet, wobei identische Teile der beiden Einrichtungen mit gleichen Bezugszeichen bezeichnet sind. Der Behälter 101 der Einrichtung gemäss der Figur 2 ist weitgehend ähnlich wie der Behälter 1 ausgebildet, unterscheidet sich von diesem jedoch dadurch, dass sein dem Mantel 7 entsprechender, zylindrischer Mantel 107 mindestens in seinem unteren Bereich, in dessen Innenraum beim Betrieb die Teilchen bewegt werden, mit einer Heiz- und/oder Kühlvorrichtung 109 versehen ist, die einen Durchgang zum wahlweisen Hindurchleiten eines Heiz- bzw. Kühlfluids aufweist und schematisch als Rohrschlange dargestellt ist, wobei der Mantel 107 sowie die Heiz- und/oder Kühlvorrichtung 109 selbstverständlich durch eine Wärmeisolation gegen die Umgebung des Behälters isoliert sein können. Ferner kann der im wesentlichen aus einem metallischen Material, wie rostfreiem Stahl, bestehende Mantel 107 mindestens ein mit einer durchsichtigen Scheibe versehenes, ein visuelles Beobachten der Teilchen ermöglichendes Fenster aufweisen und/oder innen mit einem dem Anhaften von Teilchen entgegenwirkenden Überzug aus Polytetrafluoräthylen oder einem anderen geeigneten Material beschichtet sein, wobei der Überzug möglichst dünn sein soll, so dass er den Wärmedurchgang möglichst wenig hemmt.

Das in der Figur 2 mit 133 bezeichnete Einlassorgan für ein teilchenförmiges Gut weist einen als Anschluss 133a dienenden Stutzen auf, der oberhalb des beim Betrieb von den Teilchen eingenommenen Raumbereichs am Mantel 107 befestigt und auf dessen Innenseite etwa bündig mit der Mantel-Innenfläche ist. Ein im Bearbeitungsraum 31 angeordnetes, formfestes, durch ein Rohrstück gebildetes Teilchen-Leitungsstück 133b ist lösbar am Anschluss 133a befestigt und derart nach unten gebogen, dass es in der Nähe des Aufsatzes 25 knapp oberhalb der Rotorscheibe 23 in den Bearbeitungsraum 31 mündet und sich zumindest sein oberer Abschnitt oberhalb der beim Betrieb von den Teilchen eingenommenen Raumbereichs befindet. Der Anschluss 133a ist durch eine lösbare Verbindungsleitung mit einer Zufuhrvorrichtung 91 verbunden. Bei Verfahren, bei denen keine Zufuhr von teilchenförmigem Gut während dem Agglomerieren und/oder Überziehen vorgesehen ist, kann das Leitungsstück 133b entfernt und/oder der Anschluss 133a mit einem lösbar befestigbaren, deckel- oder stopfenartigen Verschlusselement verschlossen werden.

Die Sprühvorrichtung 135 der in der Figur 2 ersichtlichen Einrichtung unterscheidet sich von der Sprühvorrichtung 35 gemäss der Figur 1 dadurch, dass ihr Sprühorgan mindestens eine knapp oberhalb der Rotorscheibe 23 in den Bearbeitungsraum 31 mündende Düse 135a hat, so dass sich die Austrittsmündung der bzw. jeder Düse beim Betrieb im Höhenbereich der bewegten Teilchen befindet, wobei zum Beispiel mehrere um die Behälterachse herum verteilte Düsen vorhanden sind. Die Austrittsmündungen der Düsen 135a befinden sich nahe bei der Innenfläche des Mantels 107. Die Düsen bilden mit einer Vertikalen einen Winkel und sind beispielsweise mindestens ungefähr oder genau horizontal gerichtet. Wie es in der Figur 3 ersichtlich ist, bilden die Düsen 135a im Grundriss mit den durch ihre Mündungen und die Achse 17 des Behälters und der Rotorscheibe 23 verlaufenden Radiallinien einen Winkel, wobei die Düsen derart gerichtet sind, dass die beim Betrieb zersprühte Flüssigkeit eine Geschwindigkeitskomponente hat, die parallel zur Tangentialgeschwindigkeit der in der durch einen Pfeil bezeichneten Richtung rotierenden Rotorscheibe 23 ist.

Das Filter 139 ist in zwei Filtersektionen 139a und 139b unterteilt, die unabhängig von einander mittelbar gehalten sind. Eine Filtersteuer- und Filterreinigungs-Vorrichtung 145 besitzt mit den Ausgängen der beiden Filtersektionen 139a, 139b verbundene Ventile, um die beiden Filtersektionen wahlweise strömungsmässig mit dem Gasansaugteil des Gebläses 41 zu verbinden oder zu sperren. Die Vorrichtung 145 besitzt ferner mindestens einen Rüttler, um wahlweise eine der beiden Filtersektionen zu rütteln.

Wenn mit einer der in den Figuren 1 und 2 dargestellten Einrichtungen eine Charge Agglomerat- oder Granulat-Teilchen hergestellt werden soll, wird die Rotorscheibe 23 in ihre untere Endstellung abgesenkt, in der sie mit ihrem Dichtungsring am Sitz 5 anliegt und den Bearbeitungsraum 31 nach unten abschliesst. Ferner werden der unterste Behälterteil mit dem konischen Wandteil 3 und einem an ihn anschliessenden Teil des zylindrischen Mantels in üblicher Weise durch Betätigen einer nicht dargestellten Hydraulik- oder Pneumatikvorrichtung vorübergehend abgesenkt sowie vom restlichen, von einem nicht dargestellten Gestell gehaltenen Teil des Behälters getrennt, eine Charge mit einer vorgegebenen Menge eines trockenen, teilchenförmigen Gutes 99 in den untersten zylindrischen Behälterteil eingebracht und die Behälterteile wieder zusammengesetzt. Des weitern wird mit dem Gebläse 41 Luft aus der Umgebung durch die Zuleitung 51 sowie den Behälter 1 hindurch gesaugt und über die Ableitung 61 wieder in die Umgebung abgeleitet. Danach wird die Rotorscheibe 23 angehoben und mit der Antriebsvorrichtung gedreht. Die Breite des zwischen dem Sitz 5 und der Rotorscheibe 23 vorhandenen Ringspalts wird für den Agglomerationsvorgang normalerweise auf einen verhältnismässig kleinen Wert eingestellt. Der Luftdurchfluss wird durch entsprechendes Einstellen von mindestens einem der Regulierorgane 53, 63 ebenfalls auf einen relativ kleinen Wert eingestellt, wobei aber der den Ringspalt von unten nach oben durchströmende Luftstrom zumindest ausreichen soll, um ein Herunterfallen von Teilchen durch den Ringspalt zu verhindern. In den Figuren 1 und 2 sind vom teilchenförmigen Gut 99 nur gerade einige sich momentan auf der Rotorscheibe 23 befindende Teilchen angedeutet. Diese rollen infolge der von der rotierenden Rotorscheibe auf sie ausgeübten Zentrifugalkraft auf der Rotorscheibe nach aussen und werden also von der Achse 17 wegbewegt, wobei sie mehr oder weniger spiralförmige Bahnen beschreiben. Wenn die von der Rotorscheibe bewegten Teilchen über den Rand der Rotorscheibe hinaus gelangen, werden sie durch das Auftreffen auf die Behälterwandung und den erwähnten Luftstrom nach oben umgelenkt sowie angehoben, wonach sie beim Aufsatz 25 oder in dessen Nähe wieder nach unten auf die Rotorscheibe zurück fallen und/oder rollen. Die angehobenen Teilchen können abhängig von der eingestellten Ringspaltbreite und Luftdurchflussmenge ein einigermassen kompaktes Bett bilden, in welchem benachbarte Teilchen einander im allgemeinen berühren, oder aber möglicherweise mindestens stellenweise mehr oder weniger fluidisiert sein und ein Fliessbett bzw. eine Wirbelschicht bilden, wobei während des eigentlichen Agglomerationsvorgangs normalerweise keine oder höchstens eine geringfügige Fluidisierung erforderlich ist. Während die Teilchen in dieser Weise im Bearbeitungsraum 31 bzw. 131 bewegt werden, wird mit dem Sprühorgan der Sprühvorrichtung 35 bzw. 135, eine Flüssigkeit in den Bearbeitungsraum 31 und auf die Teilchen gesprüht, so dass diese agglomeriert werden und ein Granulat bilden. Wie noch näher erläutert wird, kann eventuell in der Endphase des Agglomerations- oder Granulationsvorganges noch eine gewisse Menge des trockenen, teilchenförmigen, in der Zufuhrvorrichtung gespeicherten Gutes durch das Einlassorgan 33, bzw. 133, in den Bearbeitungsraum 31 eingebracht, nämlich mit der Dosierschnecke dosiert und mit Druckluft oder einem anderen Gas in den Bearbeitungsraum hineingeblasen oder durch den allenfalls im Bearbeitungsraum vorhandenen Unterdruck in diesen hineingesaugt werden.

Zum Trocknen werden die Granulat-Teilchen im Bearbeitungsraum 31 wiederum durch Drehen der Rotorscheibe und Hindurchleiten von Luft bewegt, wobei aber selbstverständlich keine Flüssigkeit mehr in den Bearbeitungsraum hineingesprüht wird. Ferner wird die angesaugte Luft zumindest für den Trocknungsvorgang mit dem Gaserhitzer 57 vor ihrem Eintritt in den Bearbeitungsraum 31 erwärmt. Zudem wird durch das Verstellen von mindestens einem der Regulierorgane 53, 63 sowie durch Höherstellen der Rotorscheibe 23 und die daraus resultierende Vergrösserung des Spaltes zwischen dem Sitz 5 und der Rotorscheibe der Luftdurchfluss durch den Bearbeitungsraum vergrössert, so dass die Teilchen verwirbelt und zumindest stellenweise möglichst weitgehend fluidisiert werden. Nach dem Trocknen der hergestellten Granulat-Teilchen wird die Rotorscheibe 23 wieder in die untere Endstellung abgesenkt, der die Charge hergestellter Granulat-Teilchen enthaltende, unterste Behälterteil vom restlichen Behälterteil getrennt sowie entleert, wonach wieder eine neue Charge des zu granulierenden, teilchenförmigen Gutes in den Behälter eingebracht und verarbeitet werden kann.

Nachdem nun der allgemeine Ablauf der Herstellung von Granulat- oder Agglomerat-Teilchen beschrieben wurde, sollen nun Untersuchungsergebnisse über den Ablauf des Granulations- oder Agglomerationsvorgangs und dessen Steuerung näher erläutert werden. Es wurden Versuche mit verschiedenen teilchenförmigen Gütern mit oder ohne Bindemittel durchgeführt.

Bei einer ersten Gruppe von Versuchen wurde für die Agglomeration ein Bindemittel beigegeben. Als Bindemittel wurde beispielsweise Polyvinylpyrrolidon, abgekürzt PVP, verwendet. Bei verschiedenen Versuchen wurde das PVP als festes, teilchenförmiges Gut dem zu agglomerierenden, teilchenförmigen Gut beigemischt und das bewegte Gemisch mit einem flüssigen Befeuchtungsmittel, nämlich demineralisiertem oder destilliertem Wasser besprüht. Bei anderen Versuchen wurde das PVP in einem Lösungsmittel, nämlich in demineralisiertem oder destilliertem Wasser gelöst und als Lösung auf die zu agglomerierenden, bewegten Teilchen aufgesprüht. Die Versuche zeigten, dass der zeitliche Verlauf des Drehmoments bei Zugabe des Bindemittels in Form eines festen Schüttgutes oder in Form einer Lösung zumindest im wesentlichen qualitativ gleich ist.

Als ursprüngliches, trockenes, teilchenförmiges Gut wurde zum Beispiel Laktose und dieser als festes Bindemittel beigemischtes Polyvinylpyrrolidon, abgekürzt PVP, oder eine Mischung von Laktose, Maisstärke und PVP, oder eine Mischung von Mannit und PVP oder eine Mischung von mikrokristalliner Cellulose, wie sie unter den Handelsbezeichnungen Sanacel 90 oder Emcocel erhältlich ist, und PVP verwendet, wobei auch noch die Bindemittelanteile variiert wurden. Als Flüssigkeit wurde jeweils demineralisiertes oder destilliertes Wasser in den Bearbeitungsraum eingesprüht und zwar konstante Mengen pro Zeiteinheit. Die Rotorscheibe 23 wurde jeweils mit einer konstanten Drehzahl im Bereich von 350 bis 450 Umdrehungen pro Minute gedreht, so dass sich bei einem Rotorscheiben-Durchmesser von ungefähr 47 cm Rotorscheiben-Umfangsgeschwindigkeiten von ungefähr 8,6 m/s bis 11 m/s ergaben. Bei der in den Bearbeitungsraum 31 eingeleiteten Luft handelte es sich um aus einem Raum eines Gebäudes oder dessen Umgebung angesaugte Luft, die lediglich filtriert, in keiner Weise konditioniert, d.h. weder getrocknet noch befeuchtet wurde, so dass also die in den Bearbeitungsraum einströmende Luft zumindest annähernd die gleiche Feuchtigkeit wie die Umgebungsluft hatte. Die Luft wurde dabei für den Agglomerationsvorgang entweder ohne Erwärmung mit normaler, etwa 20 bis 25°C betragender Raumtemperatur in den Bearbeitungsraum eingeleitet oder mit dem Gaserhitzer auf beispielsweise ungefähr 60°C erwärmt. Die Luftdurchflussmenge oder -rate wurde beispielsweise am Anfang eines Agglomerationsvorganges auf einen bestimmten Wert eingestellt und bis mindestens ungefähr zum Ende einer verhältnismässig kurzen, nachfolgend näher definierten Befeuchtungsphase auf diesem belassen. Die an die Befeuchtungsphase anschliessende Phase des Agglomerationsvorgangs wurde entweder mit gleichbleibendem oder mit erhöhtem Luftdurchfluss durchgeführt. Für den Trocknungsvorgang wurde der Luftdurchfluss normalerweise, wie bereits erwähnt (nochmals) erhöht. Der Luftdurchfluss wurde im übrigen derart eingestellt, dass das teilchenförmige Gut in allen Phasen des Verfahrens ausreichend bewegt und nötigenfalls mehr oder weniger aufgewirbelt sowie fluidisiert wird, ohne in das Filter 39 bzw. 139 geblasen zu werden.

Bei den durchgeführten Untersuchungen wurde während des Agglomerationsvorgangs laufend der bei konstanter Drehzahl der Rotorscheibe 23 zur von dieser verbrauchten Leistung proportionale Wert des zum Drehen der Rotorscheibe erforderlichen Drehmomentes D ermittelt und als Kurve in Abhängigkeit der Zeit t aufgezeichnet, zum Beispiel direkt mit einem Schreiber registriert. Die Untersuchungen zeigten, dass die sich ergebenden Kurven für verschiedene Ausgangsstoffe verschieden sind und sogar für gleiche Ausgangsstoffe von Charge zu Charge variieren können, aber doch qualitativ ähnlich sind und gewisse, bei allen Ausgangsstoffen auftretende Gemeinsamkeiten haben. Der Ablauf eines Agglomerationsvorgangs und insbesondere der zeitliche Verlauf des Drehmoments ist im allgemeinen, zumindest in qualitativer Hinsicht, unabhängig davon, ob das allenfalls benötigte Einlassorgan für ein teilchenförmiges Gut und die Sprühvorrichtung gemäss der Figur 1 oder gemäss der Figur 2 ausgebildet ist und wie viele Düsen die Sprühvorrichtung 35 bzw. 135 aufweist. Wenn die in Figur 2 dargestellte Einrichtung für Verfahren verwendet wird, bei denen nach dem Einbringen einer Charge teilchenförmiges Gut bis zum Ende der Verarbeitung dieser Charge kein zusätzliches, teilchenförmiges Gut in den Bearbeitungsraum 31 eingebracht werden sollte, wurde das Teilchen-Leitungsstück 133b jeweils vorgängig entfernt und der Anschluss 133a verschlossen.

Nun wird als Beispiel die Granulation eines ursprünglichen, teilchenförmigen Gutes mit 98 Gew.-% Laktose — 150 mesh — und 2 Gew.-% Polyvinylpyrrolidon, abgekürzt PVP, näher erläutert. Die Agglomeration erfolgte mit einer konstanten Flüssigkeitseinsprührate von 0,025 Milliliter Flüssigkeit pro Minute und pro Gramm des ursprünglichen, trockenen, teilchenförmigen Gutes. Die Luftdurchflussmenge wurde ungefähr zwei Minuten nach dem Beginn des Einsprühvorganges, nämlich ungefähr am Ende der Befeuchtungsphase, vergrössert, dann während dem restlichen Agglomerationsvorgang konstant belassen und in der Anfangsphase des Trocknungsvorgangs erhöht.

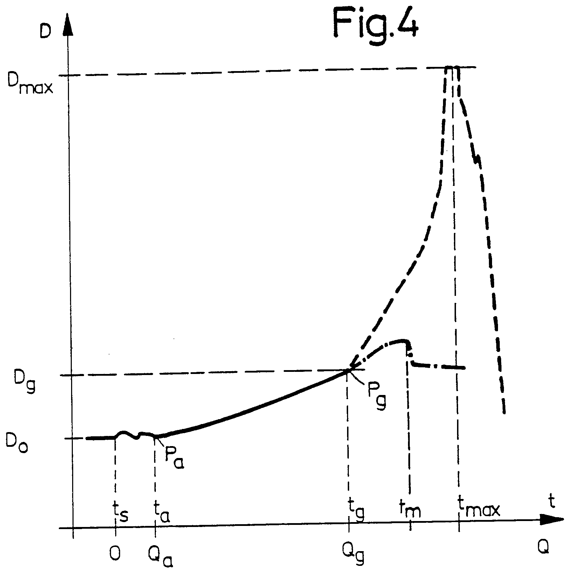

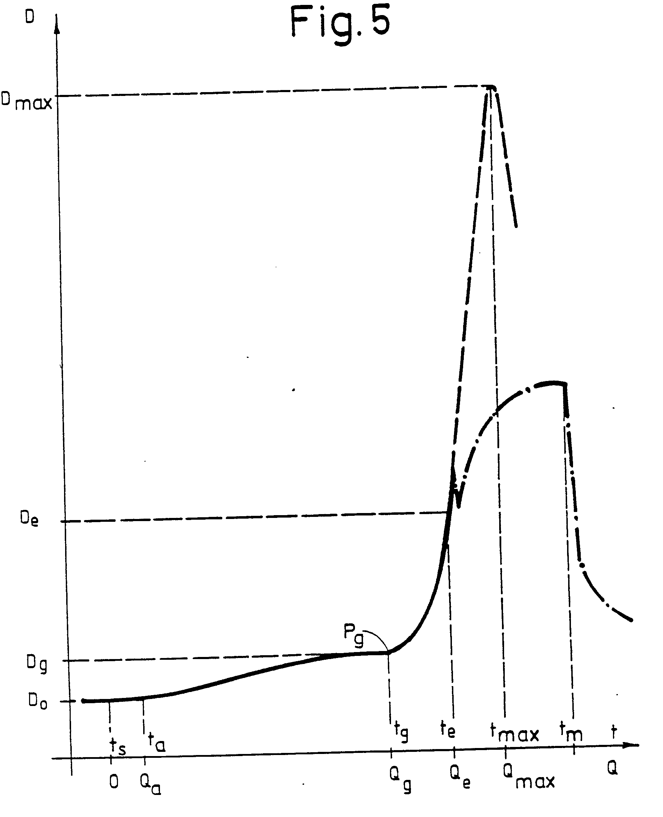

Der sich bei einem solchen Versuch ergebende Verlauf des Drehmomentes D in Abhängigkeit von der Zeit t ist in der Figur 4 dargestellt. Wenn beim Start zunächst die Rotorscheibe 23 gedreht und Luft durch den Bearbeitungsraum 31 hindurch gefördert, aber noch keine Flüssigkeit in den Bearbeitungsraum gesprüht wird, hat das Drehmoment, das zum Überwinden der Reibungsverluste in der Lagern, sowei der Übertragungsverluste im Kegelradgetriebe der Lager- und Getriebeeinheit 15 und zum Bewegen des trocknen, sich auf der Rotorscheibe befindenden Gutes erforderlich ist abgesehen von allfälligen kleinen Schwankungen den Wert $D_o$. Im Zeitpunkt $t_s$ setzt das Einsprühen der Flüssigkeit in den Bearbeitungsraum ein. Auf der Abszisse ist zusätzlich zur Zeit t noch die pro Masseneinheit des trockenen, teilchenförmigen Gutes eingesprühte Flüssigkeitsmenge Q aufgetragen, die vom Zeitpunkt $t_s$ an proportional zur Zeitdifferenz $(t-t_s)$ ist. Nach dem Abbruch der Flüssigkeits-Zufuhr steigt die tatsächliche Flüssigkeitsmenge Q selbstverständlich nicht mehr weiter an, was in der Figur 4 und übrigens auch in der nachfolgend beschriebenen Figur 5 durch nur noch gestrichelt oder strichpunktiert gezeichnete Kurventeile kenntlich gemacht ist. Bis zum Zeitpunkt $t_a$, dem die Flüssigkeitsmenge $Q_a$ und der Punkt $P_a$ der Kurve zugeordnet sind, bleibt das Drehmoment, abgesehen von kleinen Schwankungen, noch annähernd gleich dem Wert $D_o$ oder steigt eventu-

ell geringfügig an. Das sich von $t_s$ bis $t_a$ erstreckende Zeitintervall bildet die bereits erwähnte Befeuchtungsphase, in der die Teilchen befeuchtet werden, ohne dass eine nennenswerte Agglomeration stattfindet. Im Zeitpunkt $t_a$ beginnen die Teilchen zu agglomerieren und das Drehmoment steigt mit zumindest annähernd konstanter oder geringfügig wachsender Steigung bis zu einem Zeitpunkt $t_g$ mit der zugeordneten Flüssigkeitsmenge $Q_g$ an und erreicht dort beim Punkt $P_g$ der Kurve den Wert $D_g$. Im Anfangsteil der sich von $t_a$ bis $t_g$ erstreckenden Verfahrensphase verbinden sich zuerst Teilchen des ursprünglich vorhandenen, teilchenförmigen Gutes zu grösseren Teilchen, an die sich dann, zumindest vorherrschend, zusätzliche, bereits im ursprünglichen Gut vorhandene Teilchen anlagern. Insbesondere im sich zum Zeitpunkt $t_g$ erstreckenden Endteil der genannten, zwischen $t_a$ und $t_g$ liegenden Verfahrensphase erfolgt die Agglomeration dann derart, dass sich praktisch keine bereits agglomerierten Teilchen verbinden, sondern nur ursprünglich im teilchenförmigen Gut vorhandene, Teilchen an bereits agglomerierte, grössere Teilchen anlagern, und zwar jeweils verhältnismässig symmetrisch zum Mittelpunkt eines bereits agglomerierten Teilchens, so dass die agglomerierten Teilchen gleichmässig grösser werden und ziemlich einheitliche Grössen sowie rundliche, kugelartige Formen erhalten. Beim Kurvenpunkt $P_g$ und in dessen näherer Umgebung haben die Agglomerat Teilchen zudem einen für die Bildung eines Granulats günstigen Flüssigkeitsgehalt, der eine gute Bindung und damit verbunden auch gute Festigkeitseigenschaften ergibt. Wenn nach dem Zeitpunkt $t_g$ weiter Flüssigkeit eingesprüht wird, wird der Verlauf des Drehmoments durch den gestrichelten Kurventeil wiedergegeben. Die Kurve hat in diesem Fall beim Kurvenpunkt $P_g$ einen Knick und die Steigung wird sprungartig grösser, bis das Drehmoment im Zeitpunkt $t_{max}$ seinen Maximalwert $D_{max}$ erreicht. In der zwischen den Zeitpunkten $t_g$ und $t_{max}$ stattfindenden Phase verbinden sich zunehmend bereits agglomerierte Teilchen miteinander. In dieser Phase findet daher eine Agglomeration mit rasch und ziemlich unterschiedlich wachsenden Teilchen statt, wobei die Agglomerat-Teilchen mehr Flüssigkeit aufnehmen, als sie zum Binden der in ihnen enthaltenen Teilchen des ursprünglichen Gutes benötigen, und daher überfeuchtet werden. Im Zeitpunkt $t_{max}$ sind dann die Hohlräume zwischen den sich auf der Rotorscheibe befindenden Agglomerat-Teilchen mehr oder weniger mit Flüssigkeit gefüllt Wird noch mehr Flüssigkeit eingesprüht, fällt das Drehmoment steil ab, was dadurch verursacht wird, dass die sich auf der Rotorscheibe befindenden Teilchen nun in der Flüssigkeit suspendiert werden.

Der Zeitpunkt, in dem der Agglomerationsvorgang, d.h. das Einsprühen von Flüssigkeit beendet wird, sei mit $t_e$ bezeichnet und die bis zum Zeitpunkt $t_e$ pro Masseneinheit des trockenen, teilchenförmigen Gutes eingesprühte Flüssigkeitsmenge sei $Q_e$. Wenn der Zeitpunkt $t_e$ mit dem Zeitpunkt $t_g$ zusammenfällt, haben die gebildeten Granulat-Teilchen, wie bereits erwähnt, gute Bindungs- und Festigkeitseigenschaften. Dies ist auch für in der näheren Umgebung des Kurvenpunktes $P_g$ vor oder nach diesem liegende Kurven punkte zutreffend. Die diesen Kurvenpunkten entsprechenden, pro Masseneinheit trockenes Gut insgesamt eingesprühte Flüssigkeitsmengen sollen bei Verwendung eines Bindemittels vorzugsweise höchstens 20% und beispielsweise höchstens 10% von den Flüssigkeitsmengen $Q_g$ abweichen. Entsprechendes gilt für die Abweichungen der Zeitdauern $(t_e - t_s)$ von den Zeitdauern $(t_g - t_s)$. Bei der Beendung des Agglomerationsvorgangs im Kurvenpunkt $P_g$ oder der erwähnten näheren Umgebung von diesem haben die Granulat Teilchen dann eben auch kugelartige Formen sowie relativ enge Grössenverteilungen und Grössen, die im für pharmazeutische Anwendungen bei der Herstellung in Kapseln einzufüllender Granulat-Teilchen günstigen Bereich von beispielsweise 0,25 mm bis 2 mm oder sogar im besonders vorteilhaften Bereich von 0,5 mm bis 1 mm liegen.

Die Teilchengrösse kann natürlich durch den Zeitpunkt $t_e$ beeinflusst werden, in dem die Agglomeration beendet wird. Bei den Versuchen wurden unter anderem für verschiedene Verhältnisse von $Q_e/Q_g$ durch Sieben der gebildeten Granulat-Teilchen der Teilchengrössenbereich ermittelt, in welchem ungefähr oder mindestens 90% der insgesamt gebildeten Teilchen liegen. Dabei ergab sich zum Beispiel, dass bei einem Verhältnis $Q_e/Q_g = 0,9$ ungefähr 91 Gew.-% der Granulat-Teilchen in einem Grössenbereich von 0,25 bis 0,5 mm und bei einem Verhältnis $Q_e/Q_g = 1,08$ ungefähr 89 Gew.-% der Teilchen in einem Grössenbereich von 0,71 bis 1,4 mm liegen.

Wenn die Flüssigkeitszufuhr im Zeitpunkt $t_g$ beendet wird und der Trocknungsvorgang beginnt, hat das Drehmoment D von diesem Zeitpunkt an den in der Figur 4 durch den strickpunktierten Kurventeil dargestellten Verlauf, wobei die Flüssigkeitsmenge Q, wie bereits erwähnt, dann selbstverständlich nicht mehr zunimmt. Das Drehmoment D steigt nach dem Beenden der Flüssigkeitszufuhr noch ein wenig an, was wahrscheinlich dadurch zustande kommt, dass im Inneren der Teilchen enthaltene Flüssigkeit infolge der Zentrifugalkräfte und durch Diffusionsvorgänge an die Teilchenoberflächen gelangt und deren Haftwirkung noch ein wenig vergrössert. Nach diesem Anstieg bildet die Kurve ein "flaches" Maximum und fällt dann ab. Wenn im Zeitpunkt $t_m$ der Luftdurchfluss zur Beschleunigung der Trocknung vergrössert wird, fällt das Drehmoment zunächst steil und danach wieder langsam ab, bis es nach vollständiger Trocknung — was in der Figur 4 nicht mehr ersichtlich ist — wieder ungefähr den Wert $D_o$ erreicht.

Die Zeitpunkte $t_a$ und $t_g$ bzw. die zugeordneten Flüssigkeitsmengen $Q_a$, $Q_g$ sind jedoch unter anderem von der Temperatur und Feuchtigkeit der in den Bearbeitungsraum einströmenden Luft, von der spezifischen Oberfläche und damit von der Teilchengrösse des ursprünglichen, trokkenen, teilchenförmigen Gutes und von der Luftdurchflussmenge abhängig. Bei den Versuchen mit Laktose ergaben sich in der Grösse von 2 Minuten liegende Befeuchtungszeiten $(t_a-t_s)$, während die Zeitdauern $(t_g-t_s)$ im Bereich von 7 bis 10 Minuten lagen. Zum Beispiel ergaben sich für $Q_g$ und $t_g$ bei schönem Wetter Werte von 0,24 ml/g bzw. 9,6 min und bei Regenwetter Werte von 0,185 ml/g bzw. 7,4 min, wobei für $Q_g$ entsprechend der Definition von Q das Flüssigkeitsvolumen pro Masseneinheit des trockenen, teilchenförmigen Gutes angegeben ist.

Bei den Versuchen mit Mannit wurde gleich wie bei den Versuchen mit Laktose mit Flüssigkeitseinsprühraten von 0,025 ml/min g gearbeitet und es ergaben sich auch ähnliche Werte für $t_a$ und $t_g$. Die mikrokristalline Cellulose (Sanacel 90) benötigt für die Agglomeration grössere Flüssigkeitsmengen als Laktose und Mannit. Bei den Versuchen mit der Cellulose wurde daher mit einer grösseren Flüssigkeitseinsprührate gearbeitet, die 0,07 ml/min g betrug. Dabei ergaben sich für die Befeuchtungsphase, d.h. für $(t_a-t_s)$, Werte in der Grösse von 8 min und für $(t_g-t_s)$ Werte in der Grösse von 30 min. Auch bei der Granulation von Mannit und mikrokristallinen Cellulose ergaben sich in der Umgebung von $t_g$ Granulate mit vorteilhaften Bindungs- sowie Festigkeitseigenschaften und günstige Teilchengrössen sowie Grössenverteilungen.

Wenn für die Produktion aus einem bestimmten teilchenförmigen Ausgangsgut ein Granulat hergestellt werden soll, dessen Teilchen bestimmte, vorgegebene Eigenschaften haben sollen, die einem bestimmten Kurvenpunkt zugeordnet werden können, kann man vorsehen, den Agglomerationsvorgang bei diesem Kurvenpunkt zu beenden. Da nun die Kurvenformen und insbesondere die Zeitdauern $(t_g-t_s)$ von Charge zu Charge variieren können, lassen sich die gewünschten Eigenschaften der Granulat-Teilchen nicht durch Festlegen eines konstanten Wertes der Zeitdauer $(t_e-t_s)$ erreichen. Zur Festlegung des Zeitpunktes $t_e$ bzw. der Zeitdifferenz $(t_e-t_s)$ bestehen nun jedoch zum Beispiel folgende Verfahrensvarianten:

### Variante A

Man ermittelt während des Agglomerationsvorgangs laufend den Differentialquotienten dD/dt, d.h. die erste Ableitung des Drehmoments nach der Zeit oder den dazu proportionalen Differentialquotienten dD/dQ, d.h. die erste Ableitung des Drehmoments nach der pro Masseneinheit Trokkengut eingesprühten Flüssigkeitsmenge. Daraus kann der Zeitpunkt ermittelt werden, in welchem der während der Befeuchtungsphase ungefähr Null betragende Differentialquotient einen positiven Wert annimmt und das Drehmoment zu wachsen beginnt. Dieser Zeitpunkt kann nun dem Zeitpunkt $t_a$ zugeordnet werden. Wenn der Zeitpunkt $t_a$ auf diese Weise ausreichend genau ermittelt werden kann, gibt die Zeitdifferenz $(t_a-t_s)$ ein

Mass für die Festlegung der Zeitdifferenz $(t_e-t_s)$, d.h. die letztere kann dann gleich einem Produkt $k(t_a-t_s)$ gemacht werden, wobei k ein experimentell bestimmbarer, fester Faktor ist. Der Zeitpunkt $t_a$ kann jedoch wegen der Schwankungen des momentanen Wertes des Drehmoments D häufig nur mit einer relativ grossen Ungenauigkeit bestimmt werden, so dass dieses Verfahren für die Festlegung des Zeitpunktes $t_e$ oft, zumindest für sich allein, nicht ausreichend genau ist.

### Variante B

Man legt für das Drehmoment einen Schwellenwert $D_e$ fest und beendet das Einsprühen sobald das Drehmoment den Schwellenwert $D_e$ erreicht, wodurch der Zeitpunkt $t_e$ festgelegt wird. Diese Variante beruht auf der Erkenntnis, dass $D_g$ beim Verarbeiten von mehreren Chargen des gleichen Gutes im allgemeinen von Charge zu Charge weniger stark variiert alstg.

### Variante C

Es wird gleich wie bei der Variante A laufend der Differentialqotient dD/dt oder dD/dQ ermittelt. Der Zeitpunkt $t_g$ und der Wert $D_g$ des Drehmoments können daran erkannt werden, dass die Steigung der Kurve und der Differentialquotient sprungartig von einem ersten positiven Wert in einen zweiten, grösseren positiven Wert ändert. Da das Drehmoment in der Praxis im allgemeinen zwischen $t_a$ und $t_g$ nicht so glatt verläuft, wie es durch die gezeichnete Kurve dargestellt ist, sondern ein wenig um die idealisierte Kurve herumschwankt, müssen die Messwerte von D bei der Ermittlung der Differentialquotienten über ein gewisses Zeitintervall gemittelt werden. Man kann daher die genaue Lage der sprungartigen Zunahme des Differentialquotienten bei der praktischen Durchführung einer Agglomeration erst im einem Zeitpunkt feststellen, der bereits ein wenig hinter dem Zeitpunkt $t_g$ liegt. Wie erwähnt, ergeben sich in der Nähe von $t_g$ Granulate mit für pharmazeutische Anwendungen günstigen Grössen. Man kann daher zum Beispiel vorsehen, den Agglomerationsvorgang gerade im ein wenig nach dem Zeitpunkt $t_g$ liegenden Zeitpunkt abzubrechen, in dem die sprungartige Zunahme des Differentialquotienten erfasst wird. Wenn die angestrebten Granulat-Eigenschaften hingegen einem Zeitpunkt $t_e$ entsprechen, der nach dem Zeitpunkt $t_g$ und nach dem Zeitpunkt liegt, in welchem die sprungartige Zunahme des Differentialquotienten erfasst wird, kann nach der Erfassung der sprungartigen Zunahme noch während einer gewissen Zeitdauer eine gewisse Flüssigkeitsmenge eingesprüht werden. Diese zusätzliche Einsprühzeitdauer bzw. zusätzliche Flüssigkeitsmenge kann fest vorgegeben oder zum Beispiel mit einem Proportionalitätsfaktor proportional zur Zeitdauer $(t_g-t_s)$ gemacht werden. Eine andere Möglichkeit bestände darin, nach dem Zeitpunkt $t_g$ noch so lange Flüssigkeit zuzuführen, bis das Drehmoment um einen beispielsweise fest vorgegebenen Wert über den Wert $D_g$ angestiegen ist.

Falls man den Agglomerationsvorgang bei Verwendung der Variante C in einem vor $t_g$ liegenden Zeitpunkt $t_e$ beenden will, besteht im Prinzip die Möglichkeit, nach der Erfassung der sprungartigen Zunahme des Differential quotienten mit der Zufuhrvorrichtung 91 eine fest vorgegebene oder aufgrund der Zeitdauer $(t_g - t_s)$ berechnete, zusätzliche Menge des teilchenförmigen Gutes durch das Einlassorgan 33 in den Wirbelraum 31 einzubringen. Dadurch wird der momentane Wert von Q verkleinert und die Verknüpfung zwischen t und Q verändert. Wenn man die Q-Skala als feststehend annimmt, wird die Zeitskala gedehnt, wobei man auf der Kurve gewissermassen wieder zu einem vor $t_g$ liegenden Kurvenpunkt zurückspringt. Nach diesem Sprung kann zum Beispiel noch während einer bestimmten Zeit Flüssigkeit eingesprüht werden, um zum Beenden des Agglomerationsvorgangs vorgesehenen Kurvenpunkt zu kommen. Dazu ist allerdings zu bemerken, dass nicht alle Eigenschaften der agglomerierten Teilchen einen solchen "Rückwärts-Zeitsprung" mitmachen, so dass die Teilchen, wenn der Agglomerationsvorgang nach einem solchen Sprung in einem auf der Kurve fiktiv vor $t_g$ liegenden Zeitpunkt $t_e$ beendet wird, nicht vollständig die gleichen Eigenschaften haben, wie wenn der fragliche Kurvenpunkt ohne den "Rückwärts-Zeitsprung" erreicht wird.

Es wurde auch eine Gruppe von Versuchen durchgeführt, bei denen ein Teilchen aus mikrokristalliner Cellulose aufweisendes, teilchenförmiges Gut ohne Zugabe eines festen oder flüssigen Bindemittels agglomeriert wurde, wobei als Befeuchtungsmittel demineralisiertes oder destilliertes Wasser in den Bearbeitungsraum eingesprüht wurde.

In der Figur 5 ist als Beispiel für ein ohne Bindemittel durchgeführtes Agglomerationsverfahren der zeitliche Verlauf des Drehmoments für die Agglomeration eines teilchenförmigen Gutes dargestellt, das aus der unter dem Handelsnamen "Emcocel" erhältlichen, mikrokristallinen Cellulose besteht. Bei der Verwirbelung wurde als Befeuchtungsmittel demineralisiertes Wasser in den Bearbeitungsraum eingesprüht. Die gezeichnete Kurve wurde mit einer im wesentlichen gemäss der Figur 2 ausgebildeten Einrichtung ermittelt, wobei aber das Teilchen-Leitungsstück 133b entfernt so wie der Anschluss 133a des zum Einleiten eines teilchenförmigen Gutes dienenden Einlassorgans 133 verschlossen und zudem die Sprühvorrichtung 135 nur mit einer einzigen Düse 135a versehen war.

Im in der Figur 5 gezeichneten Diagramm bezeichnen t, Q und D die gleichen Variablen wie im Diagramm gemäss der Figur 4. Ferner haben die mit Indizes bezeichneten Werte der Variablen sowie der Kurvenpunkt $P_g$ — zumindest in Bezug auf die zeitliche Änderung des Drehmoments — analoge Bedeutungen wie in der Figur 4. Im Zeitpunkt $t_s$ beginnt das Einsprühen des flüssigen Befeuchtungsmittels. Das Drehmoment D steigt dann zwischen den Zeitpunkten $t_a$ und $t_g$ langsam an, wobei der sich zwischen den Zeitpunkten $t_a$ und $t_g$ befindende Kurvenabschnitt leicht s-Förmig ist, so dass die Steigung im letzten, sich unmittelbar vor dem Zeitpunkt $t_g$ befindenden Teilabschnitt zumindest annähernd den Wert Null hat. Wenn über den Zeitpunkt $t_g$ hinaus Flüssigkeit in den Bearbeitungsraum eingesprüht wird, steigt das Drehmoment wie in der Figur 4 steil an. Beim durch die Figur 5 veranschaulichten, ohne Zugabe eines Bindemittels durchgeführten Verfahren findet — zumindest wahrscheinlich — zwischen den Zeitpunkten $t_a$ und $t_g$ gleich wie beim Arbeiten mit Bindemittel eine Agglomeration der ursprünglich vorhandenen Teilchen statt. Wenn die Flüssigkeitszufuhr vor dem Zeitpunkt $t_g$ beendet wird, sind die Bindungen zwischen den allenfalls agglomerierten Teilchen jedoch nur so schwach, dass sie sich beim anschliessenden Trocknungsvorgang wieder lösen, so dass das teilchenförmige Gut am Ende des Trocknungsvorgangs wieder in der arsprünglichen, unagglomerierten Form vorliegt. Damit beim ohne Bindemittel durchgeführten Verfahren eine bleibende Agglomeration stattfindet, muss daher auch nach dem Zeitpunkt $t_g$ noch Flüssigkeit eingesprüht werden.

Wenn der Einsprühvorgang im in der Figur 5 mit $t_e$ bezeichneten Zeitpunkt beendet wird, hat die Flüssigkeitsmenge den Wert $Q_e$ erreicht und bleibt dann konstant. Das Drehmoment steigt im Trocknungsvorgang, d.h. nach der Beendung der Flüssigkeitszufuhr, wie es durch den strichpunktierten Kurventeil dargestellt ist, zunächst mit ungefähr gleichbleibender Kurvensteigung noch ein wenig an, fällt danach vorübergehend etwas ab und steigt anschliessend mit abnehmender Steigung weiter auf ein Maximum an. Wenn im Zeitpunkt $t_m$ der Luftdurchfluss zur Beschleunigung des Trocknungsprozesses vergrössert wird, nimmt das Drehmoment zuerst steil und anschliessend langsam ab.

Wenn hingegen nach dem Zeitpunkt $t_e$ noch weiter Flüssigkeit in den Bearbeitungsraum gesprüht würde, stiege das Drehmoment gemäss dem gestrichelt gezeichneten Kurventeil weiter steil an und würde analog wie in der Figur 4 im Zeitpunkt $t_{max}$ ein Maximum bilden.

Die Flüssigkeitszufuhr kann beispielsweise in einem Zeitpunkt $t_e$ beendet werden, der eines oder möglicherweise mindestens eines der Kriterien erfüllt, die weiter vorne in den Verfahren gemäss den Varianten A, B, C angegeben wurden. Dabei ist vor allem das als Variante B beschriebene Verfahren vorteilhaft, bei dem für das Drehmoment ein fester Schwellenwert $D_e$ vorgegeben wird, der durch einige Versuche ermittelt werden kann. Stattdessen könnte man wie beim weiter vorne als Variante C bezeichneten Verfahren den Zeitpunkt $t_g$ ermitteln und danach noch während einer zusätzlichen, beispielsweise fest vorgegebenen Zeitdauer oder bis zu einem Zeitpunkt Flüssigkeit einsprühen, in welchem das Drehmoment gleich der Summe von $D_g$ und einem fest vorgegebenen Differenzwert ist.

Beim Agglomerieren mit Verwendung eines Bindemittels haben die Agglomerat-Teilchen, wie weiter vorne angegeben, besonders vorteilhafte

Eigenschaften, wenn $Q_e$ höchstens 20% und vorzugsweise höchstens 10% von $Q_g$ abweicht. Beim Agglomerieren ohne Bindemittel ist jedoch eine grössere Abweichung zulässig, wobei $Q_e$ beispielsweise bis 30% grösser sein kann als $Q_g$. In diesem Fall kann es zwar geschehen, dass bereits agglomerierte Teilchen miteinander zu noch grösseren Teilchen verbunden werden. Aber auch in diesem Fall lassen wegen der formend und auch ein wenig komprimierend auf die Agglomerat-Teilchen wirkenden Rotorscheibe zumindest annähernd kugelförmige sowie auch sonst qualitativ gute Agglomerat-Teilchen herstellen, wenn $t_e$ günstig festgelegt wird.

Wenn mit einer Einrichtung gemäss der Figur 1 oder 2 Granulat-Teilchen produziert werden sollen, die zum Beispiel für pharmazeutische Anwendungen vorgesehen sind, kann der Arbeitsablauf mittels der elektronischen Überwachungs-, Steuer- und/oder Regelvorrichtung 95 manuell und/oder automatisch gesteuert und/oder geregelt werden.

Wenn ein Granulationsprozess manuell oder automatisch gestartet wird, werden das Gebläse 41, der Motor 81 und sofort oder mit einer gewissen Verzögerung die zum Zuführen der Flüssigkeit dienende Zufuhrvorrichtung 93 in den Betriebszustand gebracht. Des weitern wird zum Beispiel auch das Durchfluss-Regulierorgan 53 und/oder 63 mittels der Vorrichtung 95 manuell oder automatisch derart gesteuert und eingestellt, dass sich eine für die jeweilige Verfahrensphase vorgegebene Luftdurchflussmenge oder -rate durch den Bearbeitungsraum 31 ergibt. Die Vorrichtung 95 verarbeitet danach fortlaufend die ihr vom Drehmoment-Messorgan 75 zugeführten, elektrischen Mess-Signale, bildet zum Beispiel auch den Differentialquotienten $dD/dt$ und/oder $dD/dQ$ und stellt den zeitlichen Verlauf des Drehmoments D und/oder des genannten Differentialquotienten auf einem Registriergerät oder Bildschirm dar. Die Messwerte von D und/oder die Werte der gebildeten Differentialquotienten werden bei der Verarbeitung in der Vorrichtung 95 über gewisse Zeitintervalle gemittelt, um die beim Betrieb auftretenden Schwankungen des Drehmoments mindestens einigermassen auszugleichen. Die letztgenannten Zeitintervalle sollen dabei kürzer als die Zeitdauern $(t_a - t_s)$ und $(t_g - t_s)$ sein.

Die Vorrichtung 95 ermittelt aufgrund der Änderung des Differentialquotienten $dD/dt$ oder $dD/dQ$ von Null auf einen positiven Wert den Zeitpunkt $t_a$ und speichert die Zeitdauer $(t_a - t_s)$. Ferner ändert die Vorrichtung 95 mindestens ungefähr im Zeitpunkt $t_a$ vorzugsweise automatisch die Einstellung des Regulierorgans 53 und/oder 63, damit sich die weiter vorne erwähnte Änderung der Luftdurchflussmenge ergibt. Die Änderung des Luftdurchflusses kann zum Beispiel in demjenigen Zeitpunkt erfolgen, in welchem aufgrund der Änderung des Differentialquotienten der Zeitpunkt $t_a$ ermittelt wird und der wegen der erforderlichen Mittelung geringfügig hinter dem letzteren liegt. Es besteht jedoch auch die Möglichkeit, die Zeitdauer zwischen dem Start-Zeitpunkt $t_s$ und der Änderung der Luft-Durchflussmenge auf einen vorgegebenen, festen Wert einzustellen.

Die Überwachungs-, Steuer- und/oder Regelvorrichtung 95 dient vor allem noch dazu, um unter Heranziehung von mindestens einer der weiter vorne beschriebenen Verfahrensvarianten A, B, C das Ende des Agglomerationsvorgangs derart festzulegen, dass die gebildeten Granulat-Teilchen möglichst genau vorgegebene Eigenschaften haben. Der Zeitpunkt $t_e$, in dem die Agglomeration beendet wird, kann manuell oder automatisch festgelegt werden, wobei auch manuell gesteuerte und automatisch stattfindende Vorgänge kombiniert werden können. Dabei hängt es davon ab, ob der Agglomerationsprozess gerade beim Zeitpunkt $t_g$ bzw. dem diesem zugeordneten Kurvenpunkt $P_g$ oder vor oder nach diesem beendigt werden soll, welche der Varianten A, B, C verwendet wird oder werden. Ferner hängt es davon ab, ob bereits gewisse Kennwerte von der Verarbeitung früherer Chargen bekannt sind oder nicht. Wenn noch keine Kennwerte und Eigenschaften der Kurve bekannt sind, kann zum Beispiel der Zeitpunkt $t_e$ bei der Verarbeitung der ersten Charge durch eine manuelle Steuerung festgelegt werden, wobei die den Prozess steuernde Person ihre Entscheide aufgrund von der von einem Gerät der Vorrichtung 95 aufgezeichneten Kurve des zeitlichen Verlaufs von D und/oder $dD/dt$ und/oder $dD/dQ$ und/oder von sonstigen von Geräten der Vorrichtung 95 angezeigten oder ausgedruckten Zahlenwerten und/oder von Untersuchungen an während des laufenden Agglomerationsvorgangs aus dem Behälter 1 bzw. 101 entnommenen Granulat-Proben treffen kann. Wenn der ungefähre Verlauf der die Zeitabhängigkeit des Drehmoments darstellenden Kurve und/oder andere Kennwerte bekannt sind, kann die Vorrichtung 95 dann auf eine zumindest weitgehend oder vollständig automatische Arbeitsweise umgeschaltet werden.

Wenn der Agglomerationsvorgang in einem vor dem Zeitpunkt $t_g$ liegenden Zeitpunkt $t_e$ enden soll, kann die Vorrichtung 95 die Zeitdauer $(t_e - t_g)$ zum Beispiel gemäss der Variante A festlegen, indem die genannte Zeitdauer gleich einem Produkt $k(t_a - t_s)$ gemacht wird, wobei die Konstante k vorgängig ermittelt und in die Vorrichtung eingegeben wurde. Beim Erreichen des derart errechneten Zeitpunkts $t_e$ steuert die Vorrichtung 95 dann die Zufuhrvorrichtung 93 derart, dass die Flüssigkeitszufuhr abgebrochen wird. Stattdessen kann die Vorrichtung 95 gemäss der Variante B die gemittelten Momentanwerte des Drehmoments D laufend mit einem vorgängig eingegebenen Schwellenwert vergleichen und die Flüssigkeitszufuhr beenden, wenn das Drehmoment gleich dem Schwellenwert wird. Die beiden Methoden können ferner auf verschiedene Weisen miteinander kombiniert werden. Die Vorrichtung könnte zum Beispiel den Einsprühvorgang nach dem zuerst auftretenden gemäss der Variante A oder der Variante B ermittelten Wert

von $t_e$ noch während einer aufgrund bestimmter Kriterien errechneten Zeitdauer weiterführen, so dass gewissermassen eine Mittelung der sich nach der Variante A und B ergebenden Zeitdauern $(t_e—t_s)$ stattfindet. Eventuell kannte auch im Fall, dass die Agglomeration vor dem Zeitpunkt $t_g$ bzw. vor der auf eine Masseneinheit des trockenen Gutes bezogenen Flüssigkeitsmenge $Q_g$ beendet werden soll, gemäss der Variante C vorgegeben werden. Die Vorrichtung 95 würde bei dieser Verfahrensvariante dann im Zeitpunkt $t_g$ oder, genauer gesagt, im Zeitpunkt, in welchem sie aufgrund der sprungartigen Zunahme des Differentialquotienten die Lage von $t_g$ ermittelt, vorübergehend die Zufuhrvorrichtung 91 in Gang setzen, so dass diese eine fest vorgegebene oder aus gewissen beim laufenden Prozess ermittelten Kennwerten errechnete Menge von trockenem, teilchenförmigem Gut in den Wirbelraum 31 hineinbringt. Die Vorrichtung 95 würde dann ferner den Einsprühvorgang nach einer zusätzlichen, fest vorgegebenen oder aus im Verfahren ermittelten Kennwerten errechneten Zeitdauer abbrechen.

Wenn der vorgesehene Zeitpunkt $t_e$ bei oder kurz nach dem Zeitpunkt $t_g$ liegt, kann $t_e$ ebenfalls gemäss der Variante A oder B oder durch eine Kombination dieser Varianten festgelegt werden. Die genauesten Ergebnisse ergeben sich jedoch in diesem Fall im allgemeinen dann, wenn die Vorrichtung den Zeitpunkt $t_e$ gemäss der Variante C festlegt.

In der Praxis kann auch durch Versuche und eine laufende Kontrolle der gebildeten Granulate eruiert werden, welche Steuerungsart bei einem bestimmten Produkt die beste Produktqualität ergibt.

Die Flüssigkeitszufuhr könnte während des Agglomerationsvorgangs statt kontinuierlich auch intermittierend erfolgen. Ferner wäre es möglich, die Flüssigkeitszufuhrrate im Verlauf eines Agglomerationsvorganges in bestimmter Weise zu ändern, wobei die Zufuhrvorrichtung 93 im letzteren Fall selbstverständlich mit einem Dosierorgan ausgestattet sein müsste. Die Steuerung des Agglomerationsvorganges wäre bei Verwendung dieser Varianten entsprechend anzupassen. Dabei könnte es insbesondere vorteilhaft sein, anstelle des Differentialquotienten dD/dt den Differentialquotienten dD/dQ zur Steuerung heranzuziehen.

Während der Durchführung des Agglomerationsverfahrens gelangt das Feuchtigkeits-Messorgan 87 in Berührung mit sich auf der rotierenden Rotorscheibe 23 befindenden Teilchen und eventuell auch mit frei durch den Bearbeitungsraum fliegenden Teilchen des teilchenförmigen Gutes, misst die Feuchtigkeit dieser Teilchen und führt der elektronischen Vorrichtung 95 elektrische Signale zu, die ein Mass für die oberflächliche und gesamte Feuchtigkeit, d.h. den Wassergehalt der Teilchen geben. Die Rollbewegung der sich auf der Rotorscheibe befindenden Teilchen trägt dabei dazu bei, dass keine Teilchen am Messorgan 87 festhaften. Die vom Messorgan 87 gemessenen Feuchtigkeitswerte und deren Änderung können von der elektronischen Vorrichtung 95 und/oder einer Person als zusätzliche Informationen verwendet werden, um den momentanen Zustand der Teilchen einem bestimmten Punkt auf der in den Figuren 4 und 5 dargestellten Kurven zuzuordnen und den Verfahrensablauf zu steuern.

Wie bereits erörtert, können die Einrichtungen auch verwendet werden, um frisch in ihren Bearbeitungsraum 31 eingebrachte oder vorgängig in diesem durch Agglomeration gebildete Teilchen mit mindestens einem Überzug zu versehen. Zu diesem Zweck kann man zum Beispiel zusätzlich zu den zu überziehenden, ersten Teilchen noch ein zum Aufbringen auf diese bestimmtes, aus kleineren, zweiten Teilchen bestehendes Pulver in den Bearbeitungsraum einbringen, das Gemisch von Teilchen durch Drehen der Rotorscheibe 23 sowie Verwirbeln mit einem Luftstrom bewegen und eine normalerweise ein Bindemittel aufweisende oder bildende Flüssigkeit einsprühen. Die zweiten Teilchen können durch das Einlassorgan 33 bzw. 133 in den Bearbeitungsraum eingebracht werden. Bei Verwendung der in der Figur 2 dargestellten Einrichtung wird in diesem Fall das Teilchen-Leitungsstück 133b selbstverständlich in montiertem Zustand im Bearbeitungsraum belassen.

Für den Überziehvorgang gelten ähnliche Gesetzmässigkeiten, wie sie vorgängig für die Agglomeration erläutert wurden. In einer Verfahrensphase, die dem zwischen den Kurvenpunkten $P_a$ und $P_g$ liegenden Kurventeil der Figur 4 entspricht, werden nämlich die kleineren, als Überzugsmaterial bestimmten Teilchen an die zu überziehenden, grösseren Teilchen angelagert, ohne dass sich die letzteren miteinander verbinden. Wenn hingegen der Punkt $P_g$ merkbar überschritten werden sollte, würde die unerwünschte Agglomeration der zu überziehenden und bereits überzogenen Teilchen beginnen. Beim Überziehen von Teilchen ist es daher vorteilhaft, dass der dem Kurvenpunkt $P_g$ entsprechende Punkt, wenn man auf der Kurve von links her kommt, nicht oder zumindest nicht wesentlich überschritten wird.

Der Überziehvorgang läuft zumindest in gewissen Fällen besonders effizient und gleichmässig ab, wenn die Verfahrensparameter und -bedingungen einem kurz vor dem Kurvenpunkt $P_g$ liegenden Zustand entsprechen. Das Verfahren kann daher zum Beispiel zum Überziehen von Teilchen derart durchgeführt werden, dass nach dem anfänglichen Einbringen einer bestimmten Menge der als Überzugsmaterial dienenden Teilchen Flüssigkeit eingesprüht wird, bis der Kurvenpunkt $P_g$ mindestens annähernd erreicht oder geringfügig überschritten ist. In diesem ungefähr dem Zeitpunkt $t_g$ entsprechenden Zeitpunkt kann das Einsprühen von Flüssigkeit vorübergehend unterbrochen und durch das Einlassorgan 33 bzw. 133 eine bestimmte Menge neues, teilchenförmiges Überzugsmaterial in den Bearbeitungsraum eingebracht werden. Durch das Einbringen von neuem Überzugsmaterial ergeben sich Bedingungen, die einem links vom Punkt P$_g$ liegenden Zustand entsprechen, ähnlich wie es weiter vorne bei der Beschreibung der Variante C im Hinblick auf den Agglomerationsvorgang erörtert wurde. Wenn nach dem Einbringen von neuem, teilchenförmigem Überzugsmaterial weiter Flüssigkeit eingesprüht wird, entspricht dies in dem der Figur 4 entsprechenden Diagramm einer Bewegung entlang der Kurve nach rechts zum Punkt P$_g$ hin. Wenn dieser erreicht wird, kann wieder neues Überzugsmaterial eingebracht oder der Überziehvorgang beendet werden. Mann kann also abwechselnd Flüssigkeit in den Bearbeitungsraum einsprühen und festes Überzugsmaterial in diesen einbringen. Auf diese Weise kann zumindest ein wesentlicher Teil des Überzugsmaterials auf die zu überziehenden Teilchen aufgebracht werden, indem man gewissermassen in einem in der Nähe des Kurvenpunktes P$_g$ liegenden Zustandsbereich hin und her pendelt, wobei die Steuerung analog wie bei der Agglomeration aufgrund der Drehmomentmessung und eventuell unter Hinzuziehung der Feuchtigkeitsmessung erfolgt.

Wenn der Überziehvorgang bei einem Zustand durchgeführt werden soll, der einem andern Kurvenpunkt entspricht, kann dieser durch Zuordnung eines Werts des Drehmoments oder der zeitlichen Drehmomentänderung charakterisiert werden. Man kann dann in analoger Weise in einem in der Nähe dieses vorgegebenen Kurvenpunktes liegenden Zustandsbereich hin und her pendeln, wie es vorgängig für den Punkt P$_g$ erläutert wurde.

Möglicherweise könnte man das Überziehverfahren dahingehend modifizieren, dass auch während des Zeitintervalls, in welchem neues, teilchenförmiges Überzugsmaterial in den Bearbeitungsraum eingebracht wird, noch Flüssigkeit eingesprüht wird. Bei einer solchen Variante würde also während einer kontinuierlichen Flüssigkeitseinsprühung intermittierend teilchenförmiges Überzugsmaterial in den Bearbeitungsraum eingebracht, bis die Flüssigkeitseinsprühung beendet würde. Des weiteren könnte man eventuell vorsehen, gleichzeitig kontinuierlich Flüssigkeit einzusprühen und kontinuierlich teilchenförmiges Überzugsmaterial in den Bearbeitungsraum einzubringen und das Verhältnis zwischen den Zufuhrraten aufgrund der gemessenen Drehmoment- und eventuell Feuchtigkeitswerte zu steuern. Ferner bestände die Möglichkeit, das teilchenförmige Überzugsmaterial in einer Flüssigkeit zu suspendieren und diese Suspension in den Bearbeitungsraum einzusprühen. Bei dieser Variante des Überziehverfahrens könnte dann zum Beispiel aufgrund der Drehmoment-Messwerte die eingesprühte Suspensionsmenge festgelegt und/oder der Feststoffteilchen- gehalt der Suspension derart dosiert werden, dass ein Teil des Überziehvorgangs bei Bedingungen durchgeführt wird, die einem in der Nähe eines vorgegebenen Kurvenpunktes, etwa des Kurvenpunktes P$_g$ liegenden Zustand entsprechen.

Selbstverständlich kann auch das Aufbringen von Überzügen auf die Teilchen und der normalerweise nachfolgende Trocknungsprozess mittels der Überwachungs-, Steuer- und/oder Regelvorrichtung 95 manuell oder automatisch gesteuert und/oder geregelt werden. Dabei kann die Vorrichtung 95 zum Beispiel auch den Gaserhitzer ein- und ausschalten und eventuell aufgrund einer Luft-Temperaturmessung regeln. Selbstverständlich können das Gebläse 41 und der Motor 81 zu gegebener Zeit, zum Beispiel am Ende der Verarbeitung einer Charge, manuell oder automatisch mittels der Vorrichtung 95 ausser Betrieb gesetzt werden.

Anstelle des Feuchtigkeits-Messorgans 87 oder zusätzlich zu diesem könnte auch weiter oben im Bearbeitungsraum ein Feuchtigkeits-Messorgan angeordnet werden, das nicht mehr in Berührung mit den sich auf der Rotorscheibe befindenden Teilchen käme. Ferner könnte man ein Feuchtigkeits-Messorgan derart hoch oben im Bearbeitungsraum oder in der aus diesem herausführenden Luftableitung anordnen, dass es überhaupt keinen direkten Kontakt mit den Teilchen hat. Das Messorgan würde dann die Feuchtigkeit der Abluft messen, die mit der Feuchtigkeit der Teilchen verknüpft ist, so dass die Messwerte ebenfalls noch ein Mass für die Feuchtigkeit der Teilchen ergäben.

Des weitern kann man eines der beiden Durchfluss-Regulierorgane 53, 63 weglassen und/oder die Leitungen 51 sowie 61 miteinander verbinden, so dass sie zusammen mit dem Behälter 1 bzw. 101 einen geschlossenen Kreislauf bilden.

Ferner kann man statt Luft auch ein anderes Gas durch den Bearbeitungsraum hindurchleiten.

**Patentansprüche**

1. Verfahren zum Agglomerieren von Teilchen und/oder zum Überziehen von solchen, insbesondere zum Überziehen mit anderen Teilchen, wobei die Teilchen in einen unten durch eine um eine vertikale Achse (17) drehbare Rotorscheibe (23) begrenzten Bearbeitungsraum (31) eines Behälters (1, 101) eingebracht und durch Drehen der Rotorscheibe (23) auf dieser bewegt sowie durch aufwärts durch den Bearbeitungsraum (31) hindurch geleitetes Gas über die Rotorscheibe (23) empor gehoben werden, dadurch gekennzeichnet, dass mindestens eine Grösse gemessen wird, die mit dem Drehmoment und/oder der Leistung verknüpft ist, das bzw. die zum Drehen der Rotorscheibe (23) erforderlich ist, und das Verfahren in Abhängigkeit von dieser gemessenen Grösse gesteuert wird.

2. Verfahren nach Anspruch 1, wobei die Rotorscheibe (23) mit einer Antriebsvorrichtung (77) gedreht wird, dadurch gekennzeichnet, dass in Bezug auf die Übertragungsrichtung der Drehungen von der Antriebsvorrichtung (77) auf die Rotorscheibe (23) als Grösse das Drehmoment zwischen der Antriebsvorrichtung (77) und der Rotorscheibe (23) gemessen wird.

3. Verfahren nach Anspruch 1 oder 2, wobei zum Agglomerieren und/oder Überziehen mindestens zeitweise und vorzugsweise kontinuierlich eine Flüssigkeit auf die bewegten Teilchen aufgesprüht wird und diese nach der Beendung des Agglomerations und/oder Überziehungsvorgangs im Bearbeitungsraum (31) getrocknet werden, dadurch gekennzeichnet, dass das Einsprühen von Flüssigkeit vorübergehend unterbrochen und/oder beendet wird und/oder den besprühten Teilchen neue Teilchen zugefügt werden, wenn die gemessene Grösse und/oder eine damit verknüpfte Grösse ein vorgegebenes Kriterium erfüllt.

4. Verfahren nach Anspruch 3, dadurch gekennzeichnet, dadurch gekennzeichnet, dass das Aufsprühen von Flüssigkeit auf die Teilchen in einem Zeitpunkt $t_e$ beendet wird, in dem das Drehmoment D oder eine dazu proportionale Grösse einen Schwellenwert $D_e$ erreicht.

5. Verfahren nach Anspruch 4, dadurch gekennzeichnet, dass der Schwellenwert als konstanter Festwert vorgegeben wird.

6. Verfahren nach Anspruch 3, dadurch gekennzeichnet, dass die erste Ableitung des Drehmoments D und/oder einer dazu proportionalen Grösse nach der Zeit t und/oder der eingesprühten Flüssigkeitsmenge Q gebildet wird, dass die zumindest vorübergehende Unterbrechung und/oder Beendung der Flüssigkeitseinsprühung und/oder das Beifügen neuer Teilchen in einem Zeitpunkt $t_e$ erfolgt, der in einer der beiden folgenden Weisen festgelegt wird:

es wird ein Zeitpunkt $t_a$, in welchem das Drehmoment D, abgesehen von allfälligen Schwankungen, ausgehend von einem Anfangswert $D_o$ zu wachsen beginnt, so wie die vom Zeitpunkt $t_s$ des Beginns der Flüssigkeitseinsprühung bis zum Zeitpunkt $t_a$ dauernde Zeitdifferenz $(t_a - t_s)$ ermittelt und in Abhängigkeit von dieser eine Zeitdifferenz $(t_e - t_s)$ festgelegt, wobei die Zeitdifferenz $(t_e - t_s)$ zum Beispiel gleich dem Produkt der Zeitdifferenz $(t_a - t_s)$ mit einem fest vorgegebenen, konstanten Faktor k gemacht wird;

es wird ein Zeitpunkt $t_g$ ermittelt, in welchem die genannte Ableitung von einem positiven Wert sprungartig in einen grösseren, positiven Wert ändert, und der Zeitpunkt $t_e$ abhängig vom Zeitpunkt $t_g$ festgelegt und zum Beispiel mindestens ungefähr gleich diesem gemacht, wobei beim Agglomerieren die insgesamt eingesprühte Flüssigkeitsmenge $Q_e$ zweckmässigerweise höchstens 30% und, insbesondere im Fall, dass ein festes oder flüssiges Bindemittel beigefügt wird, vorzugsweise höchstens 20% und beispielsweise höchstens 10% von der bis zum Zeitpunkt $t_g$ eingesprühten Flüssigkeitsmenge $Q_g$ abweicht.

7. Einrichtung zum Agglomerieren von Teilchen und/oder zum Überziehen von solchen, insbesondere zum Überziehen mit anderen Teilchen, beispielsweise zur Durchführung des Verfahrens nach einem der Ansprüche 1 bis 6, mit einem Behälter (1), einem in diesem vorhandenen, zum Aufnehmen der Teilchen dienenden Bearbeitungsraum (31), der unten durch eine um eine vertikale Achse (17) drehbare Rotorscheibe (23) zum Bewegen der sich auf ihr befindenden Teilchen begrenzt ist, einem Förderorgan (43), um Gas aufwärts durch den Bearbeitungsraum (31) zu fördern und dadurch Teilchen über die Rotorscheibe (23) empor zu heben, und einer in Drehwirkverbindung mit der Rotorscheibe (23) stehenden, zum Drehen von dieser dienenden Antriebsvorrichtung (77), gekennzeichnet durch ein Messorgan (75) zum Messen einer Grösse, die mit dem Drehmoment und/oder der Leistung verknüpft ist, das bzw. die zum Drehen der Rotorscheibe (23) erforderlich ist.

8. Einrichtung nach Anspruch 7, dadurch gekennzeichnet, dass das Messorgan ein Drehmoment-Messorgan (75) ist und in die zum Übertragen der Drehungen von der Antriebsvorrichtung (77) auf die Rotorscheibe (23) dienenden Übertragungsmittel (15, 21, 71, 73) eingeschaltet ist.

9. Einrichtung nach Anspruch 8, dadurch gekennzeichnet, dass das Drehmoment-Messorgan (75) zwischen einem zum Einstellen der Drehzahl der Rotorscheibe (23) dienenden Getriebe (79) und der Rotorscheibe (23) in die Übertragungsmittel (15, 21, 71, 73) eingeschaltet ist und dass die letzteren zwischen dem Drehmoment-Messorgan (75) und der Rotorscheibe (23) frei von zu einstellbaren Drehzahländerungen dienenden Getrieben sind, wobei das Drehmoment-Messorgan (75) zum Beispiel über eine horizontale Welle (71, 73) und ein Kegelradgetriebe mit einer vertikalen Welle (21) verbunden ist, die ihrerseits — beispielsweise über eine Rutschkupplung (27) mit der Rotorscheibe (23) verbunden ist.

10. Einrichtung nach einem der Ansprüche 7 bis 9, gekennzeichnet durch eine elektrisch mit dem Messorgan (75) verbundene Vorrichtung (95) mit elektronischen Schaltungsmitteln, um vom Messorgan (75) gelieferte Mess-Signale zu verarbeiten sowie anzuzeigen und/oder zu registrieren.

11. Einrichtung nach Anspruch 10, mit einer Sprühvorrichtung (35, 135), um zum Agglomerieren und/oder Überziehen von Teilchen auf diese eine Flüssigkeit aufzusprühen, dadurch gekennzeichnet, dass die genannte, elektronische Schaltungsmittel aufweisende Vorrichtung (95) ausgebildet ist, um das Aufsprühen von Flüssigkeit automatisch vorübergehend zu unterbrechen und/oder zu beenden, wenn die gemessene Grösse und/oder eine damit verknüpfte Grösse ein vorgegebenes Kriterium erfüllt, wobei die Vorrichtung (95) vorzugsweise manuell betätigbare Betätigungsorgane aufweist, die ausgebildet sind, um wahlweise eine automatische oder manuelle Unterbrechung und/oder Beendung des Aufsprühens von Flüssigkeit zu ermöglichen.

12. Einrichtung nach einem der Ansprüche 7 bis 11, gekennzeichnet durch mindestens ein im Bearbeitungsraum (31) angeordnetes Feuchtigkeits-Messorgan (87), das beispielsweise bezüglich der Wandung des Behälters (1) feststehend und derart von der oberen Begrenzungsfläche der Rotorscheibe (23) beabstandet ist, dass sich beim Bewegen von Teilchen momentan auf der Rotorscheibe (23) befindende Teilchen das Feuchtigkeits-Messorgan (87) berühren können.

## Revendications

1. Procédé d'agglomération de particules et/ou d'enrobage de telles particules, notamment d'enrobage à l'aide d'autres particules, selon lequel les particules sont introduites dans une chambre de traitement (31) d'une cuve (1, 101) qui est délimitée à sa partie inférieure par un disque-rotor (23) pouvant être entraîné en rotation autour d'un axe vertical (17), ces particules sont déplacées sur le disque-rotor (23) sous l'effet de la rotation de celui-ci et elles sont soulevées, au-dessus du disque-rotor (23), par un gaz qu'on fait passer vers le haut dans la chambre de traitement (31), caractérisé en ce qu'on mesure au moins une grandeur qui est liée au couple et/ou à la puissance qui sont nécessaires pour entraîner le disque-rotor (23) en rotation et en ce que le procédé est piloté en fonction de cette grandeur mesurée.

2. Procédé suivant la revendication 1, selon lequel on entraîne le disque-rotor (23) en rotation à l'aide d'un dispositif d'entraînement (77), caractérisé en ce que, compte tenu du sens suivant lequel les mouvements de rotation sont transmis du dispositif d'entraînement (77) au disque-rotor (23), on mesure comme grandeur le couple existant entre le dispositif d'entraînement (77) et le disque-rotor (23).

3. Procédé suivant la revendication 1 ou 2, selon lequel, pour l'agglomération et/ou l'enrobage, on pulvérise, au moins par moments et de préférence d'une manière continue, un liquide sur les particules déplacées et, après la fin de l'opération d'agglomération et/ou d'enrobage, on sèche ces particules dans la chambre de traitement (31), caractérisé en ce que, lorsque la grandeur mesurée et/ou une grandeur liée à celle-ci respectent un critère fixé à l'avance, on interrompt provisoirement et/ou on fait se terminer la pulvérisation de liquide et/ou on ajoute de nouvelles particules aux particules ayant été soumises à la pulvérisation.

4. Procédé suivant la revendication 3, caractérisé en ce qu'on fait se terminer la pulvérisation de liquide sur les particules à un instant $t_e$ auquel le couple D ou une grandeur proportionnelle à celui-ci atteint une valeur de seuil $D_e$.

5. Procédé suivant la revendication 4, caractérisé en ce qu'on fixe à l'avance la valeur de seuil sous la forme d'une valeur fixe constante.

6. Procédé suivant la revendication 3, caractérisé en ce qu'on forme la dérivée première du couple D et/ou d'une grandeur proportionnelle à celui-ci par rapport au temps t et/ou à la quantité de liquide Q pulvérisée et en ce que l'interruption au moins provisoire et/ou la fin de la pulvérisation de liquide et/ou l'adjonction de nouvelles particules s'effectuent à un instant $t_e$ qui est déterminé de l'une des deux manières suivantes:

on détermine un instant $t_a$ auquel, abstraction faite de fluctuations éventuelles, le couple D commence à croître en partant d'une valeur initiale $D_o$, ainsi que la différence de temps $(t_a - t_s)$ s'étendant de l'instant $t_s$ du début de la pulvérisation de liquide à l'instant $t_a$ et, en fonction de cette différence de temps, on fixe une différence de temps $(t_e - t_s)$ qu'on prend par exemple égale au produit de la différence de temps $(t_a - t_s)$ par un facteur constant k fixé à l'avance,

on détermine un instant $t_g$ auquel la susdite dérivée passe brusquement d'une valeur positive à une valeur positive plus grande et, en fonction de l'instant $t_g$, on fixe l'instant $t_e$, en le prenant par exemple au moins approximativement identique à celui-ci, la quantité de liquide $Q_e$ pulvérisée au total lors de l'agglomération s'écartant avantageusement d'au plus 30 %, et notamment dans le cas où on ajoute un liant solide ou liquide, de préférence d'au plus 20 % et par exemple d'au plus 10 % par rapport à la quantité de liquide $Q_g$ pulvérisée jusqu'à l'instant $t_g$.

7. Installation d'agglomération de particules et/ou d'enrobage de telles particules, notamment d'enrobage à l'aide d'autres particules, par exemple pour la mise en oeuvre du procédé suivant l'une des revendications 1 à 6, comportant une cuve (1), une chambre de traitement (31), prévue dans celle-ci et servant à recevoir les particules, qui est délimitée à sa partie inférieure par un disque-rotor (23) pouvant être entraîné en rotation autour d'un axe vertical (17) et servant à déplacer les particules situées sur ce disque-rotor, un organe de circulation (43) servant à faire circuler un gaz vers le haut à travers la chambre de traitement (31) et à soulever de ce fait les particules au-dessus du disque-rotor (23) et un dispositif d'entraînement (77) qui est en liaison d'entraînement en rotation avec le disque-rotor (23) et sert à entraîner celui-ci en rotation, caractérisée par un organe de mesure (75) servant à mesurer une grandeur qui est liée au couple et/ou à la puissance qui sont nécessaires pour entraîner le disque-rotor (23) en rotation.

8. Installation suivant la revendication 7, caractérisée en ce que l'organe de mesure est un organe de mesure de couple (75) et est interposé dans les moyens de transmission (15, 21, 71, 73) servant à transmettre l'entraînement en rotation, du dispositif d'entraînement (77) au disque-rotor (23).

9. Installation suivant la revendication 8, caractérisée en ce que l'organe de mesure de couple (75) est interposé, dans les moyens de transmission (15, 21, 71, 73), entre un mécanisme de transmission (79) servant à régler la vitesse de rotation du disque-rotor (23) et ce disque-rotor (23) et en ce que, entre l'organe de mesure de couple (75) et le disque-rotor (23), les moyens de transmission (15, 21, 71, 73) sont exempts de mécanismes de transmission servant à des modifications réglables de la vitesse de rotation, l'organe de mesure de couple (75) étant par exemple relié, par l'intermédiaire d'un arbre horizontal (71, 73) et d'un engrenage d'angle, à un arbre vertical (21) qui est lui-même relié au disque-rotor (23), par exemple par l'intermédiaire d'un accouplement à friction (27).

10. Installation suivant l'une des revendications 7 à 9, caractérisée par un dispositif (95) relié électriquement à l'organe de mesure (75) et comportant des circuits électroniques permettant de traiter, ainsi que d'afficher et/ou d'enregistrer, des signaux de mesure fournis par l'organe de mesure (75).

11. Installation suivant la revendication 10, comportant un dispositif de pulvérisation (35, 135) permettant, en vue de l'agglomération et/ou de l'enrobage de particules, de pulvériser un liquide sur celles-ci, caractérisée en ce que le susdit dispositif (95) comportant des circuits électroniques est agencé de façon à interrompre provisoirement et/ou faire se terminer la pulvérisation de liquide d'une manière automatique lorsque la grandeur mesurée et/ou une grandeur liée à celle-ci respectent un critère fixé à l'avance, ce dispositif (95) comprenant des organes d'actionnement, pouvant de préférence être manoeuvrés manuellement, qui sont agencés de façon à permettre au choix une interruption et/ou la fin, automatiques ou manuelles, de la pulvérisation de liquide.

12. Installation suivant l'une des revendications 7 à 11, caractérisée par au moins un organe de mesure d'humidité (87), disposé dans la chambre de traitement (31), qui est par exemple fixe par rapport à la paroi de la cuve (1) et est situé à une distance telle de la surface limite supérieure du disque-rotor (23) que des particules se trouvant momentanément sur le disque-rotor (23) puissent arriver au contact de l'organe de mesure de l'humidité (87) lors de leur déplacement.

**Claims**

1. Method for the agglomerating of particles and/or for the coating of such, in particular for the coating by other particles, wherein the particles are introduced into a treatment space (31), which is bounded at the bottom by a rotor disc (23) rotatable about a vertical axis (17), of a container (1, 101) and are moved on the rotor disc (23) through rotation thereof as well as raised above the rotor disc (23) through gas led upwardly through the treatment space (31), characterised thereby, that at least one magnitude is measured, which is related to the torque and/or the power required for the rotation of the rotor disc (23) and that the process is controlled in dependence on this measured magnitude.

2. Method according to claim 1, wherein the rotor disc (23) is rotated by a drive device (77), characterised thereby, that the torque between the drive device (77) and the rotor disc (23) is measured as magnitude with respect to the direction of transmission of the rotations from the drive device (77) to the rotor disc (23).

3. Method according to claim 1 or 2, wherein a liquid is sprayed at least at times and preferably continuously onto the moved particles for the agglomerating and/or coating and these are dried after the termination of the agglomerating and/or coating process in the treatment space (31), characterised thereby, that the spraying-in of liquid is temporarily interrupted and/or terminated and/or new particles are added to the sprayed particles when the measured magnitude and/or a magnitude related thereto fulfills a preset criterion.

4. Method according to claim 2, characterised thereby, that the spraying of liquid onto the particles is terminated at an instant $t_e$, in which the torque D or a magnitude proportional thereto has reached a threshold value $D_e$.

5. Method according to claim 4, characterised thereby, that the threshold value is preset as constant fixed value.

6. Method according to claim 3, characterised thereby, that the first derivative of the torque D and/or a magnitude proportional thereto is formed after the time t and/or the sprayed-in liquid quantity Q and that the at least temporary interruption and/or termination of the spraying-in of liquid and/or the addition of new particles takes place at an instant $t_e$, which is fixed in one of both the following manners:

An instant $t_a$, in which the torque D apart from possible fluctuations begins to grow starting from an initial value, as well as the time difference $(t_a - t_s)$ lasting from the instant $t_s$ of the beginning of the spraying-in of liquid to the instant $t_a$, are determined and a time difference $(t_e - t_s)$ is fixed in dependence thereon, wherein the time difference $(t_e - t_s)$ is for example equal to the product of the time difference $(t_a - t_s)$ and a fixedly preset constant factor k;

an instant $t_g$ is determined, in which the named derivative changes suddenly from a positive value into a greater positive value, and the instant $t_e$ is fixed in dependence on the instant t and is for example made at least approximately equal thereto, wherein the entire sprayed in liquid quantity Q during agglomerating differs expediently by at most 30% and, in particular in the case of a solid or liquid binding agent being added, preferably at most 20% and for example at most 10% from the liquid quantity $Q_g$ sprayed in up to the instant $t_g$.

7. Equipment for the agglomerating of particles and/or for the coating of such, in particular for the coating by other particles for example for the performance of the method according to one of the claims 1 to 6, with a container (1), a treatment space (31), which is present therein, serves for the reception of the particles and which is bounded at the bottom by a rotor disc (23) rotatable about a vertical axis (17) for the movement of the particles disposed thereon, a conveying organ (43) for conveying gas upwardly through the treatment space (31) and thereby to raise particles above the rotor disc (23) and a drive device (77), which stands in effective rotational connection with the rotor disc (23) and serves for the rotation thereof, characterised by a measuring organ (75) for the measurement of a magnitude which is related to the torque and/or the power required for the rotation of the rotor disc (23).

8. Equipment according to claim 7, characterised thereby, that the measuring organ is a torque-measuring organ (75) and connected into the transmission means (15, 21, 71, 73) serving for the transmission of the rotations from the drive device (77) to the rotor disc (23).

9. Equipment according to claim 8, characterised thereby, that the torque-measuring organ (75) is connected into the transmission means (15, 21, 71, 73) between the rotor disc (23) and a gear (79) serving for the setting of the rotational speed of the rotor disc (23) and that the transmission means (15, 21, 71, 73) between the torque-measuring organ (75) and the rotor disc (23) are free of gears serving for settable rotational speed changes, wherein the torque-measuring organ (75) is for example connected by way of an horizontal shaft (71, 73) and a bevel wheel gear with a vertical shaft (21), which in its turn is connected with the rotor disc (23), for example by way of a slipping clutch (27).

10. Equipment according to one of the claims 7 to 9, characterised by a device (95), which is electrically connected with the measuring organ (75), with electronic circuit means for processing as well as indicating and/or recording measurement signals supplied by the measuring organ (75).

11. Equipment according to claim 10, with a spray device (35, 135) for spraying a liquid onto the particles for the agglomerating and/or coating thereof, characterised thereby, that the device (95) displaying the named electronic circuit means is constructed automatically to interrupt the spraying-on of liquid temporarily and/or to terminate it when the measured magnitude and/or a magnitude related thereto fulfills a preset criterion, wherein the device (g5) preferably displays manually actuable actuating organs which are constructed selectably to enable an automatic or manual interruption and/or termination of the spraying-on of liquid.

12. Equipment according to one of the claims 7 to 11, characterised by at least one moisture-measuring organ (87), which is arranged in the treatment space (31) and for example stationary with respect to the wall of the container (1) and spaced from the upper boundary surface of the rotor disc (23) in such a manner that particles, which during the movement of particles are momentarily situated on the rotor disc (23), can touch the moisture-measuring organ (87).

EP 0 282 514 B1

Fig. 1

Fig.2

Fig.3

2

Fig.4

# Fig. 5